# EUROPÄISCHE PATENTANMELDUNG

(11) **EP 4 803 301 A1**
(43) Veröffentlichungstag der Anmeldung: **09.09.2026**
(21) Anmeldenummer: 26159704.1
(22) Anmeldetag: 20.02.2026
(51) Int. Cl.: B32B 15/01, B23K 20/233, C21D 1/673, C21D 8/00, C23C 2/26, C21D 9/00

(54) **BLECHFORMTEIL UND STAHLFLACHPRODUKT MIT ÜBERZÜGEN AUF AL-BASIS UND MIT ZONEN UNTERSCHIEDLICHER BLECHDICKE UND ÜBERZUGSDICKE**

(30) Priorität: 06.03.2025 DE 102025108507
(71) Anmelder: ThyssenKrupp Steel Europe AG, 47166 Duisburg (DE)
(72) Erfinder: Stille, Sebastian, 47166 Duisburg (DE); Banik, Janko, 47166 Duisburg (DE); Köyer, Maria, 47166 Duisburg (DE); Castro Müller, Cássia, 47166 Duisburg (DE)
(74) Vertreter: ThyssenKrupp Steel Europe AG

(57) **Zusammenfassung**

Die Erfindung betrifft ein Blechformteil (1) mit einem metallischen Überzug (3) auf Aluminium-Basis, wobei das Blechformteil (1) mindestens eine erste Zone (5) und eine zweite Zone (7) umfasst. Weiterhin weist das Blechformteil in der ersten Zone (5) eine erste Blechdicke d1 auf und der metallische Überzug (3) weist in der ersten Zone eine erste Überzugsdicke k1 auf. Ebenso weist das Blechformteil (1) in der zweiten Zone (7) eine zweite Blechdicke d2 auf und der metallische Überzug (3) weist in der zweiten Zone auf mindestens einer Seite eine zweite Überzugsdicke k2 auf. Dabei ist die zweite Blechdicke d2 größer als die erste Blechdicke d1 und die zweite Überzugsdicke k2 ist kleiner als die erste Überzugsdicke k1.

## Beschreibung

Die Erfindung betrifft ein Blechformteil mit einem metallischen Überzug auf Aluminium-Basis, wobei das Blechformteil mindestens zwei Zonen unterschiedlicher Dicke aufweist, ein Stahlflachprodukt zur Herstellung eines solchen Blechformteils durch Warmumformen, sowie ein Verfahren zur Herstellung eines derartigen Stahlflachproduktes als auch ein Verfahren zur Herstellung des Blechformteils aus dem Stahlflachprodukt.

Unter dem Begriff "Blechlage" werden hier alle Walzprodukte, deren Länge sehr viel größer ist als ihre Dicke, verstanden. Hierzu zählen Stahlbänder und -bleche sowie daraus gewonnene Zuschnitte und Platinen. Unter dem Begriff "Stahlflachprodukt" werden ebenfalls hier alle Walzprodukte, deren Länge sehr viel größer ist als ihre Dicke, verstanden oder Produkte, die aus mehreren Walzprodukten, wie beispielsweise zwei Blechlagen, zusammengefügt wurden.

Beim Warmumformen, auch Warmformen, Presshärten oder Warmpressformhärten genannt, werden Stahlflachprodukte, beispielsweise Stahlplatinen, die von kalt- oder warmgewalztem Stahlband abgeteilt sind, auf eine in der Regel oberhalb der Austenitisierungstemperatur (AC3) des jeweiligen Stahls liegende Warmumformtemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Stahlsubstrat ein Härtegefüge ergibt. Das Gefüge wird in ein zumindest teilweise martensitisches Gefüge umgewandelt. Es ergibt sich also ein gehärtetes Blechformteil.

Alle Angaben zu Gehalten der in der vorliegenden Anmeldung angegebenen Stahlzusammensetzungen sind auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen.

Im modernen Automobilbau ist es entscheidend, einerseits die nötige Crashperformance zu gewährleisten und andererseits möglichst leichte Bauteile zu verwenden, um das Gesamtgewicht nicht unnötig zu erhöhen. Daher ist es vorteilhaft, die Bauteile so zu designen, dass in jedem Abschnitt des Bauteils die passendsten Eigenschaften vorliegen. Eine bekannte Möglichkeit ist beispielsweise die umzuformenden Platinen in bestimmten Bereichen zu verstärken, indem eine zusätzliche Lage des gleichen Materials aufgebracht wird (häufig als "Patch" bezeichnet). Die umzuformende Platine wird also lokal aufgedickt. Das aus der Umformung resultierende Blechformteil hat dann ebenfalls Zonen mit erhöhter Dicke. Hierdurch wird die Stabilität in diesen Zonen verbessert.

Zum Beispiel zeigt die DE 10 2016 013 466 A1 ein Verbundblech, das aus einem Grundblech und einem mit dem Grundblech verbundenen Verstärkungsblech gebildet ist, wobei das Verbundblech hergestellt ist durch gemeinsames Presshärten des Grundblechs mit dem Verstärkungsblech.

Die Verwendung einer solchen, lokal aufgedickten Platine, führt jedoch zu Problemen beim zuvor beschriebenen Umformprozess, da die Platine sich aufgrund der unterschiedlichen Dicken ungleichmäßig erwärmt. Beispielsweise kann es passieren, dass in den aufgedickten Bereichen die Austenitisierungstemperatur nicht erreicht wird.

Zudem weisen die Stahlflachprodukte in der Regel einen metallischen Überzug auf Aluminium-Basis auf. Ein solcher metallischer Überzug wird bevorzugt durch Schmelztauchbeschichten des Stahlflachproduktes erzeugt. Dabei wird das Stahlflachprodukt durch eine flüssige Schmelze geführt, die aus 0,1-15 Gew.-% Si bevorzugt mehr als 1,0 Gew-% Si, optional 2-4 Gew.-% Fe, optional bis zu 5 Gew.-% Alkali- oder Erdalkalimetalle, bevorzugt bis zu 1,0% Gew.-% Alkali- oder Erdalkalimetalle, und optional bis zu 15 % Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht. Bereits beim Schmelztauchbeschichten diffundiert Eisen aus dem Stahlsubstrat in den flüssigen Überzug, so dass der metallische Überzug des Stahlflachproduktes beim Erstarren insbesondere eine Legierungsschicht und eine Al-Basisschicht aufweist.

Bei der Erwärmung des Stahlflachproduktes auf die Warmumformtemperatur erfolgt eine weitere Diffusion von Eisen in den metallischen Überzug. So stellt sich schon innerhalb kurzer Erwärmungsdauer ein mit Eisen durchlegierter metallische Überzug ein, der einen Fe-Gehalt von mindestens 35 Gew.-% aufweist.

Wie bereits beschrieben, kommt es in den Zonen höherer Dicke jedoch zu einer langsameren Aufheizung. Dies führt wiederum dazu, dass in diesen Zonen der Diffusionsprozess von Eisen in den metallischen Überzug ebenfalls langsamer verläuft. Dieser Effekt ist zudem selbstverstärkend, da der metallische Überzug zunächst beim Erhitzen verflüssigt und stark reflektierend ist. Durch die hohe Reflektivität wird die Einkopplung von Infrarotstrahlung reduziert und damit die Erwärmung behindert. Erst nachdem ausreichend Eisen in den Überzug diffundiert ist, ergibt sich eine matte Oberfläche, die einen höheren Anteil der Infrarotstrahlung absorbiert. Im Ergebnis kann es daher passieren, dass in den aufgedickten Bereichen keine ausreichende Durchlegierung und damit kein ausreichender Korrosionsschutz gewährleistet ist.

In der DE 10 2017 216 177 A1 werden diese Schwierigkeiten durch eine zusätzliche Vorkonditionierung der zusätzlichen Lage angegangen. Diese Vorkonditionierung ist beispielsweise ein thermischer Prozess, der zu Diffusion von Eisen in den metallischen Überzug führt. Hierdurch vermindert sich der Effekt der stark reflektierenden mit der aluminiumhaltigen Beschichtung versehenen Oberfläche stark. Es kommt zu einer gleichmäßigeren Erwärmung bei der späteren Warmumformung der Formplatine mit zusätzlicher Lage.

Aufgabe der vorliegenden Erfindung ist daher, ein Stahlflachprodukt zur Herstellung eines Blechformteils und ein solches Blechformteil bereitzustellen, die diese Schwierigkeiten überwinden, ohne zusätzliche Verfahrensschritte erforderlich zu machen.

Diese Aufgabe wird gelöst durch ein Blechformteil mit einem metallischen Überzug auf Aluminium-Basis,
- wobei das Blechformteil mindestens eine erste Zone und eine zweite Zone umfasst,
- wobei das Blechformteil in der ersten Zone eine erste Blechdicke d1 aufweist und der metallische Überzug in der ersten Zone eine erste Überzugsdicke k1 aufweist,
- wobei das Blechformteil in der zweiten Zone eine zweite Blechdicke d2 aufweist und der metallische Überzug in der zweiten Zone auf mindestens einer Seite eine zweite Überzugsdicke k2 aufweist,
- und wobei die zweite Blechdicke d2 größer ist als die erste Blechdicke d1 und die zweite Überzugsdicke k2 kleiner ist als die erste Überzugsdicke k1.

Diese Aufgabe wird gelöst durch ein Stahlflachprodukt mit einem metallischen Überzug auf Aluminium-Basis, insbesondere zur Herstellung eines vorgenannten Blechformteils,
- wobei das Stahlflachprodukt mindestens eine erste und eine zweite Zone umfasst,
- wobei das Stahlflachprodukt in der ersten Zone eine erste Blechdicke d1 aufweist und der metallische Überzug in der ersten Zone eine erste Überzugsdicke k1 aufweist,
- wobei das Stahlflachprodukt in der zweiten Zone eine zweite Blechdicke d2 aufweist und der metallische Überzug in der zweiten Zone eine zweite Überzugsdicke k2 aufweist,
- und wobei die zweite Blechdicke d2 größer ist als die erste Blechdicke d1 und die zweite Überzugsdicke kleiner ist als die erste Überzugsdicke.

Das Stahlflachprodukt weist also eine erste Zone und eine zweite Zone auf, wobei die Blechdicke d2 in der zweiten Zone höher ist als die Blechdicke d1 in der ersten Zone - die zweite Zone ist also aufgedickt. Weiterhin ist die Überzugsdicke d2 in der zweiten Zone kleiner als die Überzugsdicke d1 in der ersten Zone. Der metallische Überzug hat in den aufgedickten Bereichen also eine geringere Dicke als in den übrigen Bereichen.

Durch die geringere Überzugsdicke in der zweiten Zone kommt es bei der Wärmebehandlung vor der Umformung zu einer schnelleren Durchlegierung des metallischen Überzuges in der zweiten Zone. Das in den metallischen Überzug eindiffundierende Eisen erreicht in der zweiten Zone früher die Oberfläche des metallischen Überzuges. Daher vermindert sich die Reflektivität in der zweiten Zone früher, woraufhin ein größerer Anteil der Infrarotstrahlung absorbiert werden kann. Die Energieaufnahme in der zweiten Zone steigt daher in der zweiten Zone im Vergleich zur ersten Zone an. Da das Stahlflachprodukt in der zweiten Zone eine höhere Blechdicke aufweist als in der ersten Zone, wird in der zweiten Zone auch eine höhere Energiemenge benötigt, um die gleiche Temperaturerhöhung zu bewirken. Genau dies wird nun durch die schnellere Durchlegierung des metallischen Überzuges in der zweiten Zone bewirkt, so dass es zu einer Angleichung der Temperaturerhöhung im Ofen kommt. Im Ergebnis hat das Stahlflachprodukt nach einer bestimmten Zeit im Ofen ähnliche Kerntemperaturen in der ersten und in der zweiten Zone.

Die Angaben zur Dicke des Überzuges in dieser Anmeldung sind so zu verstehen, dass dies auf mindestens einer Seite des Stahlflachproduktes (bzw. Blechformteils) gilt. Häufig sind Stahlflachprodukte (und damit Blechformteile) jedoch beidseitig beschichtet. Klarstellend sei daher darauf hingewiesen, dass es in einem solchen Fall ausreichend ist, wenn die Relation auf einer Seite erfüllt ist, also auf einer Seite die Überzugsdicke in der zweiten Zone kleiner ist als die Überzugsdicke in der ersten Zone. Auf der anderen Seite des Stahlflachproduktes kann die Überzugsdicke in beide Zonen gleich groß sein.

Nachfolgend werden bevorzugte Varianten des Blechformteils erläutert, die spezielle Materialkombinationen und bevorzugte Dickenrelationen aufweisen. Für das Stahlflachprodukt zur Herstellung solcher Blechformteile gelten die entsprechenden bevorzugten Materialkombinationen und Dickenrelationen.

Bei einer bevorzugten Variante wird das Blechformteil bzw. das Stahlflachprodukt in der zweiten Zone aus mindestens einer ersten Blechlage und einer zweiten Blechlage gebildet, wobei die erste und die zweite Blechlage übereinander angeordnet sind und wobei das Blechformteil in der ersten Zone aus der ersten Blechlage gebildet wird. Das Blechformteil kann so relativ einfach hergestellt werden, indem das zugrundeliegende Stahlflachprodukt aus einer ersten Blechlage besteht, auf die eine zweite Blechlage partiell aufgeschweißt wird. So ergibt sich ein dickerer Überlappbereich, die zweite Zone, und ein Bereich ohne Überlapp, die erste Zone.

Bei einer bevorzugten Ausgestaltung des Blechformteils bzw. des Stahlflachproduktes weist die erste Blechlage ein erstes Stahlsubstrat aus einem ersten Stahl mit einem ersten Kohlenstoffäquivalent CEV auf und die zweite Blechlage ein zweites Stahlsubstrat aus einem zweiten Stahl mit einem zweiten Kohlenstoffäquivalent auf. Dabei beträgt die Differenz aus zweitem Kohlenstoffäquivalent und erstem Kohlenstoffäquivalent mindestens 0,05 %, insbesondere mindestens 0,10 % beträgt.

Das Kohlenstoffäquivalent (CEV) ist ein wichtiger Parameter zur Beurteilung der mechanischen Eigenschaften von Stahl, insbesondere seiner Festigkeit. Es fasst den Einfluss des Kohlenstoffgehalts und anderer Legierungselemente auf die Mikrostruktur und damit auf die Festigkeit des Stahls zusammen.

Das Kohlenstoffäquivalent CEV wird definiert als: $CEV = %C + \frac{%Mn}{6} + \frac{%Cu + %Ni}{15} + \frac{%Cr + %Mo + %V}{5}$ wobei CEV %C den Gehalt an C in Gewichtsprozent beschreibt (andere Elemente analog).

*% V:* Diese Formel berücksichtigt die wesentlichen Legierungselemente, die die Festigkeit des Stahls

Mit steigendem Kohlenstoffgehalt nimmt die Festigkeit des Stahls zu, da z.B. mehr Zementit (Fe₃C) im Gefüge gebildet wird. Zementit ist eine harte Phase, die die Härte und Festigkeit des Stahls erhöht.

Im Automobilbau bietet die Verwendung einer zweiten Blechlage mit einem festeren Stahlsubstrat als das Stahlsubstrat der ersten Blechlage mehrere technische Vorteile. Durch den gezielten Einsatz einer zweiten Blechlage aus festerem Stahl kann die lokale Festigkeit und Steifigkeit von Blechformteilen erheblich erhöht werden. Diese zweite Blechlage weist ein höheres Kohlenstoffäquivalent auf, was zu einer höheren Festigkeit führt. Dies ist besonders vorteilhaft in Bereichen, die hohen mechanischen Belastungen ausgesetzt sind, wie beispielsweise Aufprallzonen oder Befestigungspunkte für Fahrwerkskomponenten.

Ein weiterer Vorteil ist die Gewichtsreduktion. Anstatt das gesamte Blechformteil aus einem festeren und schwereren Material herzustellen, wird die erste Blechlage aus einem kostengünstigeren Material gefertigt, während die kritischen Bereiche mit der zweiten Blechlage verstärkt werden. Dies trägt zur Verbesserung der Energieeffizienz und Leistung des Fahrzeugs bei. Zudem verbessert die zweite Blechlage die Energieaufnahme und Verformungsfähigkeit der Karosserie bei einem Unfall, was zu einer besseren Absorption der Aufprallenergie und einer erhöhten Sicherheit der Insassen führt. Der Einsatz der zweiten Blechlage ermöglicht es außerdem, kostengünstigere Materialien für den Großteil der Karosserie zu verwenden, während nur die kritischen Bereiche mit teureren, festeren Materialien verstärkt werden. Dies kann die Produktionskosten senken. Darüber hinaus bietet die zweite Blechlage Designern mehr Flexibilität, da sie spezifische Bereiche der Karosserie gezielt verstärken können, ohne das gesamte Blechformteil neu zu gestalten. Dies erleichtert Anpassungen und Optimierungen im Entwicklungsprozess.

Je höher die Differenz aus zweiten Kohlenstoffäquivalent und erstem Kohlenstoffäquivalent ist, desto stärker kommen diese Vorteile zur Geltung.

Bei einer besonders relevanten bevorzugten Ausgestaltung des Blechformteils bzw. des Stahlflachproduktes weist die erste Blechlage ein erstes Stahlsubstrat aus einem ersten Stahl mit einem ersten Kohlenstoffäquivalent auf und die zweite Blechlage ein zweites Stahlsubstrat aus einem zweiten Stahl mit einem zweiten Kohlenstoffäquivalent. Dabei beträgt das erste Kohlenstoffäquivalent mindestens 0,47 Gew.-% und das zweite Kohlenstoffäquivalent mindestens 0,50 Gew.-%.

Bei einer besonderen Ausführungsform des Blechformteils bzw. des Stahlflachprodukts weist die erste Blechlage ein erstes Stahlsubstrat aus einem ersten Stahl auf, der zu einer ersten Stahlklasse gehört, und die zweite Blechlage weist ein zweites Stahlsubstrat aus einem zweiten Stahl auf, der zu einer zweiten Stahlklasse gehört.

Bei einer alternativen Ausführungsform des Blechformteils bzw. des Stahlflachprodukts weist die erste Blechlage ein erstes Stahlsubstrat aus einem ersten Stahl auf, der zu einer ersten Stahlklasse gehört, und die zweite Blechlage weist ein zweites Stahlsubstrat aus einem zweiten Stahl auf, der zu einer dritten Stahlklasse gehört.

Bei einer weiteren alternativen Ausführungsform des Blechformteils bzw. des Stahlflachprodukts weist die erste Blechlage ein erstes Stahlsubstrat aus einem ersten Stahl auf, der zu einer zweiten Stahlklasse gehört, und die zweite Blechlage weist ein zweites Stahlsubstrat aus einem zweiten Stahl auf, der zu einer dritten Stahlklasse gehört.

Dabei besteht ein Stahl der ersten Stahlklasse neben Eisen und unvermeidbaren Verunreinigungen (in Gew.-%) aus

| | |
|---|---|
| C: | 0,05-0,20 Gew.-%, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |

sowie optional einem oder mehreren der Elemente "Cr, B, Mo, Ni, Cu, Nb, Ti, V, W" in folgenden
Gehalten

| | |
|---|---|
| Cr: | 0,08-1,0 Gew.-%, |
| B: | 0,001-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001-1,0 Gew.-%. |

Ein Stahl der zweiten Stahlklasse besteht neben Eisen und unvermeidbaren Verunreinigungen (in Gew.-%) aus:

| | |
|---|---|
| C: | 0,12-0,30 Gew.-%, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |

sowie optional einem oder mehreren der Elemente "Cr, B, Mo, Ni, Cu, Nb, Ti, V, W" in folgenden
Gehalten

| | |
|---|---|
| Cr: | 0,08-1,0 Gew.-%, |
| B: | 0,00-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001 -1,0 Gew.-%. |

Ein Stahl der dritten Stahlklasse besteht neben Eisen und unvermeidbaren Verunreinigungen (in Gew.-%) aus

| | |
|---|---|
| C: | 0,25-0,8 Gew.-%, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |

sowie optional einem oder mehreren der Elemente "Cr, B, Mo, Ni, Cu, Nb, Ti, V, W" in folgenden
Gehalten

| | |
|---|---|
| Cr: | 0,08-1,0 Gew.-%, |
| B: | 0,001-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001 -1,0 Gew.-%. |

Stähle der ersten Stahlklasse haben somit Kohlenstoffgehalte C im Bereich von 0,05 Gew.-% bis 0,20 Gew.-%. Dagegen liegt für Stähle der zweiten Stahlklasse der C-Gehalt im Bereich von 0,12 Gew.-% bis 0,30 Gew.-% und für Stähle der dritten Stahlklasse im Bereich von 0,25 Gew.-% bis 0,8 Gew.-%.

Für die erste Stahlklasse gilt: Derart eingestellte C-Gehalte sind ein guter Kompromiss zwischen guter Härtbarkeit auf der einen Seite und guter Umformbarkeit auf der anderen Seite. Bevorzugt beträgt der C-Gehalt mindestens 0,08 Gew.-%, insbesondere mindestens 0,10 Gew.-%. Weiterhin bevorzugt beträgt der C-Gehalt maximal 0,18 Gew.-%, insbesondere maximal 0,14 Gew.-%.

Für die zweite Stahlklasse gilt: Kohlenstoff ("C") ist im Stahlsubstrat des Stahlflachproduktes in Gehalten von 0,12-0,30 Gew.-% enthalten. Derart eingestellte C-Gehalte tragen zur Härtbarkeit des Stahls bei, indem sie die Ferrit- und Bainitbildung verzögern sowie den Restaustenit im Gefüge stabilisieren. Ein Kohlenstoffgehalt von mindestens 0,06 Gew.-% ist erforderlich, um eine ausreichende Härtbarkeit und eine damit einhergehende hohe Festigkeit zu erzielen. Durch hohe C-Gehalte kann allerdings die Schweißbarkeit negativ beeinflusst werden. Um die Schweißbarkeit zu verbessern, kann der Kohlenstoffgehalt auf höchstens 0,28 Gew.-%, bevorzugt auf höchstens 0,25 Gew.-%, insbesondere maximal 0,23 Gew.-% eingestellt werden. Um die positiven Effekte der Anwesenheit von C besonders sicher nutzen zu können, können C-Gehalte von mindestens 0,12 Gew.-%, bevorzugt mindestens 0,15 Gew.-%, insbesondere mindestens 0,18 Gew.-%, bevorzugt mindestens 0,20 Gew.-% vorgesehen werden. Bei diesen Gehalten lassen sich Zugfestigkeiten des Blechformteils von mindestens 1100 MPa, insbesondere mindestens 1250 MPa, insbesondere mindestens 1400 MPa nach Warmpressformen sicher erreichen.

Für die dritte Stahlklasse gilt: Kohlenstoff ("C") ist im Stahlsubstrat des Stahlflachproduktes in Gehalten von 0,25-0,8 Gew.-% enthalten. Derart eingestellte C-Gehalte tragen zur Härtbarkeit des Stahls bei, indem sie die Ferrit- und Bainitbildung verzögern sowie den Restaustenit im Gefüge stabilisieren. Ein Kohlenstoffgehalt von mindestens 0,06 Gew.-% ist erforderlich, um eine ausreichende Härtbarkeit und eine damit einhergehende hohe Festigkeit zu erzielen. Durch hohe C-Gehalte kann allerdings die Schweißbarkeit negativ beeinflusst werden. Um die Schweißbarkeit zu verbessern, kann der Kohlenstoffgehalt auf höchstens 0,5 Gew.-%, bevorzugt auf höchstens 0,50 Gew.-%, besonders bevorzugt 0,45 Gew.-%, bevorzugt maximal 0,38 Gew.-%, insbesondere maximal 0,35 Gew.-% eingestellt werden. Um die positiven Effekte der Anwesenheit von C besonders sicher nutzen zu können, können C-Gehalte von mindestens 0,28 Gew.-%, bevorzugt mindestens 0,30 Gew.-%, insbesondere mindestens 0,31 Gew.-%, bevorzugt mindestens 0,32 Gew.-% vorgesehen werden. Bei diesen Gehalten lassen sich Zugfestigkeiten des Blechformteils von mindestens 1500 MPa, insbesondere mindestens 1750 MPa nach Warmpressformen sicher erreichen.

Für die übrigen Elemente gelten die folgenden Erläuterungen, die sich auf Stähle der ersten, zweiten und dritten Stahlklasse beziehen. Dabei sind die Erläuterungen so zu verstehen, dass bevorzugte Zahlenwerte auch bereits Vorteile bringen, wenn sie nur bei einer der Stahlklassen Anwendung finden. Es ist also nicht so zu verstehen, dass die Vorteile nur vorliegen, wenn der bevorzugte Zahlenwert simultan für beide eingesetzten Stahlklassen gilt.

Bei den Elementen P, S, N, Sn, As, Ca handelt es sich um Verunreinigungen, die bei der Stahlerzeugung nicht vollständig vermieden werden können. Gelegentlich wird Ca auch bewusst zur Abbindung von Schwefel hinzulegiert. In einem solchen Fall beträgt der Gehalt von Ca mindestens 0,001 Gew.-%. Maximal beträgt der Ca-Gehalt auch in diesem Fall 0,005 Gew.-%.

Neben diesen Elementen können auch noch weitere Elemente als Verunreinigungen im Stahl vorhanden sein. Diese weiteren Elemente werden unter den "unvermeidbaren Verunreinigungen" zusammengefasst. Bevorzugt beträgt der Gehalt an unvermeidbaren Verunreinigungen in Summe maximal 0,2 Gew.-%, bevorzugt maximal 0,1 Gew.-%. Die optionalen Legierungselemente für die eine Untergrenze angegeben ist, können auch in Gehalten unterhalb der jeweiligen Untergrenze als unvermeidbare Verunreinigungen im Stahlsubstrat vorkommen. In dem Fall werden sie ebenfalls zu den unvermeidbaren Verunreinigungen gezählt, deren Gesamtgehalt auf maximal 0,2 Gew.-%, bevorzugt maximal 0,1 Gew.-% begrenzt ist.

Silizium wird zur weiteren Erhöhung der Härtbarkeit des Stahlflachprodukts sowie zur Steigerung der Festigkeit des pressgehärteten Produkts über Mischkristallverfestigung verwendet. Silizium ermöglicht außerdem den Einsatz von Silicomanganese als Legierungsmittel, was sich begünstigend auf die Produktionskosten auswirkt. Ab einem Si-Gehalt von 0,06 Gew.-% stellt sich bereits ein Härtungseffekt ein. Ab einem Si-Gehalt von mindestens 0,15 Gew.-% tritt ein signifikanter Anstieg der Festigkeit auf. Si-Gehalte oberhalb von 2,0 Gew.-% haben deutliche Nachteile hinsichtlich Oberflächenqualität und Beschichtungsverhalten. Insbesondere bei Al-basierten Schmelztauchbeschichtungen kann es zweckmäßig sein, den Si-Gehalt auf höchstens 1,4 Gew.-%, bevorzugt höchstens 1,0 Gew.-% zu beschränken. Sofern keine speziellen Gründe höhere Si-Gehalte erforderlich machen (siehe unten), ist es vorteilhaft den Si-Gehalt noch weiter zu reduzieren auf maximal 0,50 Gew.-%, bevorzugt maximal 0,40 Gew.-%, um die Oberflächenqualität des beschichteten Stahlflachprodukts weiter zu verbessern.

Silizium vermindert die Stabilität von Eisenkarbid bzw. kann auch zur Unterdrückung der Zementitausscheidung ab Gehalten von 0,5 % bis 2,0 % eingesetzt werden. Dies ist insbesondere relevant, wenn auf einen signifikanten Bainit-Gehalt im Gefüge des Blechformteil abgezielt wird. Zudem trägt Si ab einem Gehalt von 0,5 Gew.-% auch zur Stabilisierung des verbleibenden Restaustenitgehaltes im Gefüge bei. Ab 0,7 Gew.-% wird der Restaustenitzerfall deutlich verlangsamt, so dass ein größeres Prozessfenster beim Warmumformen ermöglicht wird.

Der Mn-Gehalt des Stahls beträgt 0,1-3 Gew.-% Mn. Bei einer bevorzugten Variante beträgt der Mn-Gehalt des Stahls maximal 2,4 Gew.-% und/oder mindestens 0,5 Gew.-%, bevorzugt mindestens 0,75 Gew.-%. Bei besonders bevorzugten Ausführungsvarianten liegt der Mn-Gehalt im Bereich von 0,75-0,85 Gew.-% oder im Bereich von 1,0-1,6 Gew.-%.

Mangan wirkt als härtendes Element, indem es die Ferrit- und die Bainitbildung stark verzögert. Zusätzlich stabilisiert es den Restaustenit (Austenitbildner) und hemmt eine der Bainitumwandlung nachgelagerte Zersetzung des Restaustenits in Zementit und Ferrit. Bei Mangangehalten kleiner 0,5 Gew.-% werden während des Presshärtens selbst bei sehr schnellen Abkühlgeschwindigkeiten Ferrit und Bainit gebildet, was vermieden werden sollte. Mn-Gehalte von mindestens 0,75 Gew.-%, insbesondere mindestens 0,9 Gew.-% sind bevorzugt, wenn ein martensitisches Gefüge insbesondere in Bereichen größerer Umformung gewährleistet werden soll. Durch Anhebung der Mn-Gehalte auf mindestens 0,9 Gew.-%, insbesondere mindestens 1,1 Gew.-% kann zudem die Austenitstabilität noch einmal deutlich erhöht werden. Mangangehalte größer 2,6 Gew.-% wirken sich nachteilig auf die Verarbeitungseigenschaften aus. Insbesondere die Schweißbarkeit ist stark eingeschränkt, weshalb der Mn-Gehalt erfindungsgemäßer Stahlflachprodukte bevorzugt auf höchstens 2,4 Gew.-%, insbesondere auf höchstens 1,6 Gew.-% beschränkt ist. Mangangehalte kleiner 1,6 Gew-% werden darüber hinaus auch aus ökonomischen Gründen bevorzugt. Weiterhin sind Mn-Gehalte von maximal 2,6 Gew.-%, insbesondere maximal 2,0 Gew.-%, bevorzugt maximal 1,6 Gew.-% von Vorteil, da niedrigere Mn-Gehalte die bainitische Umwandlung beschleunigen. Dies eröffnet ein größeres Prozessfenster für den Fall, dass ein Gefüge mit signifikanten Bainitanteilen erzielt werden soll.

Der Al-Gehalt des Stahls beträgt bei einer bevorzugten Variante maximal 0,75 Gew.-%, insbesondere maximal 0,5 Gew.-%, bevorzugt maximal 0,25 Gew.-%. Alternativ oder ergänzend beträgt der Al-Gehalt bevorzugt mindestens 0,02 Gew.-%.

Aluminium wird als Desoxidationsmittel zur Abbindung von Sauerstoff eingesetzt. Zur sicheren Abbindung von Sauerstoff werden mindestens 0,01 Gew.-%, bevorzugt mindestens 0,02 Gew.-% Al im Stahl benötigt. Zudem hemmt Aluminium die Zementitbildung und trägt somit ebenfalls zur Anreicherung von Kohlenstoff im Restaustenit und zu dessen Stabilisierung bei. Da allerdings auch die Ac3-Temperatur deutlich mit steigendem Al-Legierungsgehalt nach oben verschoben wird, ist der Al-Gehalt bevorzugt auf 0,25 Gew.-% begrenzt. Ab einem Gehalt von 0,2 Gew.-% behindert Al die Umwandlung in den Austenit vor dem Presshärten zu stark, sodass die Austenitisierung nicht mehr zeit- und energieeffizient durchgeführt werden kann. Für übliche Ofentemperaturen zwischen 850 und 950 °C in der Warmumformung ist bevorzugt ein Al-Gehalt von höchstens 0,1 Gew.-% einzuhalten, um den Stahl vollständig zu austenitisieren.

Zudem hat sich gezeigt, dass es hilfreich sein kann, wenn die Summe der Gehalte von Silizium und Aluminium begrenzt sind. Bei einer bevorzugten Variante beträgt daher die Summe der Gehalte von Si und Al (üblicherweise bezeichnet als Si+Al) maximal 1,5 Gew.-%, bevorzugt maximal 1,2 Gew.-%. Ergänzend oder alternativ beträgt die Summe der Gehalte von Si und Al mindestens 0,06 Gew.-%, bevorzugt mindestens 0,08 Gew.-%.

Phosphor (P) und Schwefel (S) sind Elemente, die als Verunreinigungen durch Eisenerz in den Stahl eingeschleppt werden und nicht vollständig im großtechnischen Stahlwerksprozess beseitigt werden können. Der P-Gehalt und der S-Gehalt sollten so gering wie möglich gehalten werden, da sich die mechanischen Eigenschaften wie zum Beispiel die Kerbschlagarbeit mit zunehmendem P-Gehalt bzw. S-Gehalt verschlechtern. Ab P-Gehalten von 0,1 Gew.-% tritt zudem eine zunehmende Versprödung des Martensits auf, weshalb der P-Gehalt eines erfindungsgemäßen Stahlflachprodukts auf maximal 0,05 Gew.-%, bevorzugt maximal 0,03 Gew.-% begrenzt ist. Geringe P-Gehalte von mindestens 0,01 Gew.-% können, insbesondere bei niedrigem Si-Gehalt, vorteilhaft sein, um die Keimbildung von Zementit zu unterdrücken. Der S-Gehalt eines erfindungsgemäßen Stahlflachprodukts ist auf maximal 0,05 Gew.-%, insbesondere maximal 0,02 Gew.-%, bevorzugt maximal 0,012 Gew.-% begrenzt.

Stickstoff (N) ist aufgrund des Stahlfertigungsprozesses in geringen Mengen im Stahl vorhanden. Der N-Gehalt ist möglichst gering zu halten und sollte weniger als 0,02 Gew.-% betragen. Insbesondere bei Legierungen, die Bor enthalten, ist Stickstoff schädlich, da es durch die Bildung von Bornitriden den umwandlungsverzögernden Effekt von Bor verhindert, weshalb der Stickstoffgehalt in diesem Fall bevorzugt maximal 0,010 Gew.-%, bevorzugt maximal 0,009 Gew.-%, betragen sollte.

Der Sn-Gehalt beträgt maximal 0,03 Gew.-%, bevorzugt maximal 0,02 Gew.-%. Der As-Gehalt beträgt maximal 0,010 Gew.-%, insbesondere maximal 0,005 Gew.-%.

Optional enthält der Stahl zudem Chrom mit einem Gehalt von 0,08-1,0 Gew.-%. Bevorzugt beträgt der Cr-Gehalt maximal 0,75 Gew.-%, insbesondere maximal 0,5 Gew.-%.

Chrom wird dem Stahl eines erfindungsgemäßen Stahlflachprodukts in Gehalten von 0,08-1,0 Gew.-% zugegeben. Chrom beeinflusst die Härtbarkeit des Stahlflachprodukts, indem es die diffusive Umwandlung während des Presshärtens verlangsamt. Chrom wirkt in erfindungsgemäßen Stahlflachprodukten ab einem Gehalt von 0,08 Gew.-% günstig auf die Härtbarkeit, wobei ein Cr-Gehalt > 0,1 Gew.-% für eine sichere Prozessführung, vor allem zur Verhinderung der Bainitbildung, bevorzugt wird. Enthält der Stahl mehr als 1,0 Gew.-% Chrom, so verschlechtert sich das Beschichtungsverhalten. Um eine gute Oberflächenqualität zu erhalten, kann der Cr-Gehalt bevorzugt auf maximal 0,75 Gew.-%, insbesondere maximal 0,5 Gew.-%. begrenzt sein.

Im Falle einer optionalen Zulegierung von Chrom ist bevorzugt die Summe der Gehalte von Chrom und Mangan begrenzt. Die Summe beträgt maximal 3,3 Gew.-%, insbesondere maximal 3,15 Gew.-%. Weiterhin beträgt die Summe mindestens 0,5 Gew.-%, bevorzugt mindestens 0,75 Gew.-%.

Bevorzugt enthält der Stahl optional zudem Bor mit einem Gehalt von 0,0005-0,010 Gew.-%. B legt sich auf die Austenitkorngrenzen und verringert so ihre Energie. Damit wird die Nukleation von Ferrit unterdrückt. Für einen deutlichen Effekt werden B-Gehalte von mindestens 0,0005 Gew.-%, bevorzugt 0,001 Gew.-% benötigt. Bei Gehalten von mehr als 0,010 Gew.-% bilden sich jedoch vermehrt Borkarbide, Bornitride oder Bornitrokarbide, welche wiederum bevorzugte Keimstellen für die Nukleation von Ferrit darstellen und den härtenden Effekt wieder absenken. Insbesondere beträgt der B-Gehalt maximal 0,005 Gew.-%, bevorzugt maximal 0,004 Gew.-%.

Bei einer Zulegierung von Bor wird bevorzugt auch Titan zur Abbindung von Stickstoff hinzulegiert. Der Ti-Gehalt sollte in diesem Fall dann bevorzugt mindestens das 3,42-fache des Gehalts in Gew.-% an Stickstoff betragen.

Molybdän (Mo) kann zur Verbesserung der Prozessstabilität optional hinzugegeben werden, da es die Ferritbildung deutlich verlangsamt. Ab Gehalten von 0,002 Gew.-%, insbesondere ab mindestens 0,01 Gew.-% bilden sich dynamisch Molybdän-Kohlenstoff-Cluster bis hin zu ultrafeinen Molybdänkarbiden auf den Korngrenzen, welche die Beweglichkeit der Korngrenze und somit diffusive Phasenumwandlungen deutlich verlangsamen. Außerdem wird durch Molybdän die Korngrenzenenergie verringert, was die Nukleationsrate von Ferrit verringert. Bei Gehalten von mehr als 1,0 Gew.-% tritt keine wesentliche Steigerung der hier genutzten Wirkungen von Mo mehr ein. Aufgrund der hohen Kosten, welche mit einer Legierung von Molybdän verbunden sind, sollte der Mo-Gehalt höchstens 0,5 Gew.-%, bevorzugt maximal 0,3 Gew.-%, insbesondere maximal 0,1 Gew.-% betragen.

Optional kann der Stahl zudem Kupfer enthalten mit einem Gehalt von maximal 0,2 Gew.-%, bevorzugt maximal 0,15 Gew.-%.

Kupfer (Cu) kann optional hinzulegiert werden, um bei Zugaben von mindestens 0,01 Gew.-% die Härtbarkeit zu erhöhen. Darüber hinaus verbessert Kupfer den Widerstand gegen atmosphärische Korrosion unbeschichteter Bleche oder Schnittkanten.

Weiterhin kann der Stahl optional Nickel enthalten mit einem Gehalt von maximal 0,5 Gew.-%, bevorzugt maximal 0,15 Gew.-%.

Nickel (Ni) stabilisiert die austenitische Phase und kann optional hinzulegiert werden, um die Stabilität von Austenit und somit die Prozessstabilität bei längeren Haltezeiten während der Bainitbildung zu verbessern. Nickel hat darüber hinaus einen positiven Einfluss auf die Warmwalzbarkeit, insbesondere, wenn der Stahl Kupfer enthält. Kupfer verschlechtert die Warmwalzbarkeit. Um dem negativen Einfluss von Kupfer auf die Warmwalzbarkeit entgegenzuwirken, können dem Stahl mindestens 0,01 Gew.-% Nickel, bevorzugt mindestens 0,05 Gew.-% Nickel hinzulegiert werden. Aus ökonomischen Gründen sollte der Nickelgehalt auf Anteile von maximal 0,5 Gew.-%, bevorzugt maximal 0,4 Gew.-% beschränkt bleiben. Zudem kann es dann zu einer Verlangsamung der Bainitbildung kommen.

Zudem kann der Stahl optional eines oder mehrere der Mikrolegierungselemente Nb, Ti und V enthalten. Dabei beträgt der optionale Nb-Gehalt mindestens 0,01 Gew.-%, insbesondere mindestens 0,02 Gew.-% und maximal 0,2 Gew.-%, bevorzugt maximal 0,08 Gew.-%, bevorzugt maximal 0,04 Gew.-%. Der optionale Ti-Gehalt beträgt mindestens 0,01 Gew.-% und maximal 0,10 Gew.-%, insbesondere maximal 0,08 Gew.-%, bevorzugt maximal 0,04 Gew.-%. Der optionale V-Gehalt beträgt maximal 0,3 Gew.-%, bevorzugt maximal 0,2 Gew.-%, insbesondere maximal 0,1 Gew.-%, bevorzugt maximal 0,05 Gew.-%.

Niob (Nb) kann optional hinzulegiert werden, um ab einem Gehalt von 0,005 Gew.-%, insbesondere ab 0,010 Gew.-% zur Kornfeinung beizutragen. Allerdings verschlechtert Niob die Rekristallisierbarkeit des Stahls. Bei einem Nb-Gehalt von über 0,1 Gew.-% lässt sich der Stahl nicht mehr in üblichen Durchlauföfen vor der Feuerbeschichtung bzw. auch im Warmwalzprozess rekristallisieren.

Titan (Ti) ist ein Mikrolegierungselement, welches optional hinzulegiert werden kann, um zur Kornfeinung beizutragen. Außerdem bildet Titan mit Stickstoff grobe Titannitride, weshalb der Ti-Gehalt vergleichsweise geringgehalten werden soll. Titan bindet Stickstoff ab und ermöglicht Bor so, seine stark ferrithemmende Wirkung zu entfalten. Für eine ausreichende Abbindung von Stickstoff wird mindestens das 3,42-fache des Stickstoffgehalts benötigt, wobei mindestens 0,005 Gew.-%, bevorzugt mindestens 0,008 Gew.-% Ti für eine ausreichende Verfügbarkeit hinzugegeben werden sollten. Bevorzugt beträgt der Titan-Gehalt mindestens 0,010 Gew.-%, bevorzugt mindestens 0,015 Gew.-%. Ab 0,1 Gew.-% Ti verschlechtert sich die Kaltwalzbarkeit und Rekristallisierbarkeit deutlich, weshalb größere Ti-Gehalte vermieden werden sollten.

Vanadium (V) ist ein sehr kohlenstoffaffines Element. Wenn Vanadium frei, das heißt in ungebundenem oder gelöstem Zustand, vorliegt, kann es übersättigt gelösten Kohlenstoff in Form von Karbiden oder Clustern binden oder zumindest seine Diffusionsgeschwindigkeit verringern. Entscheidend ist dabei, dass V in gelöstem Zustand vorliegt. Überraschenderweise haben sich insbesondere sehr geringe V-Gehalte als besonders günstig für die Alterungsbeständigkeit erwiesen. Bei höheren V-Gehalten können schon bei höheren Temperaturen größere Vanadiumkarbide ausscheiden, welche sich dann bei Temperaturen von 800-900 °C, welche typisch für Durchlaufglühen von Schmelztauchbeschichtungsanlagen sind, nicht mehr auflösen. Schon kleinste Mengen Vanadium von 0,001 Gew.-% können bereits freien Kohlenstoff bei der Anlagerung an Versetzungen behindern. Ab einem V-Gehalt von 0,2 Gew.-% tritt keine Verbesserung der Alterungsbeständigkeit mehr durch Vanadium auf. Die alterungshemmende Wirkung von Vanadium ist bei V-Gehalten bis zu 0,009 Gew.-% besonders ausgeprägt, wobei sich ein maximaler Effekt ab einem bevorzugten V-Gehalt von mindestens 0,002 Gew.-% einstellt. Bei V-Gehalten größer 0,009 Gew. -% bilden sich vermehrt Vanadiumkarbide. Die Bildung von Vanadiumkarbiden kann aber auch vorteilhaft sein, insbesondere wenn ein bainitisches Gefüge gewünscht ist. In dem Fall tragen die Vanadiumkarbide mittels Ausscheidungshärtung zur Erhöhung der Festigkeit bei. Daher können Gehalte von mindestens 0,01 Gew-% entsprechend bevorzugt sein. Der Vanadium-Gehalt des Stahls eines erfindungsgemäßen Stahlflachprodukts ist zum einen aus Kostengründen auf höchstens 0,1 Gew.-% beschränkt. Zum anderen bewirken höhere V-Gehalte keine wesentliche Verbesserung der mechanischen Eigenschaften.

Im Falle einer optionalen Zulegierung von mehreren der Elemente Nb, Ti und V ist bevorzugt die Summe der Gehalte von Nb, Ti und V begrenzt. Die Summe beträgt maximal 0,1 Gew.-%, insbesondere maximal 0,068 Gew.-%. Weiterhin beträgt die Summe bevorzugt mindestens 0,015 Gew.-%.

Wolfram (W) kann optional in Gehalten von 0,001-1,0 Gew.-% zur Verlangsamung der Ferritbildung hinzulegiert werden. Es wirkt hier ähnlich wie Mo, wird jedoch schon bei kleineren Gehalten wirksam. Ein positiver Effekt auf die Härtbarkeit ergibt sich bereits bei W-Gehalten von mindestens 0,001 Gew.-%. Ab einem Gehalt von 1,0 Gew.-% lässt sich keine wesentliche Steigerung der Wirksamkeit von W auf die hier im Mittelpunkt stehenden Eigenschaften beobachten.

Die vorstehenden Erläuterungen zur bevorzugten Zusammensetzung der Stähle der drei Stahlklassen gelten selbstverständlich ebenso für die Stahlsubstrate bzw. Stähle des Stahlflachproduktes sowie die Stahlsubstrate bzw. Stähle des Blechformteils.

Bei einer bevorzugten Ausführungsform des Stahlflachprodukts bzw. des Blechformteils gilt für die erste Blechdicke d1 und die zweite Blechdicke d2: ${d}_{2} > 1 , 4 ⋅ {d}_{1}$ Insbesondere ${d}_{2} > 2 , 0 ⋅ {d}_{1}$

Versuche haben gezeigt, dass sich die strukturelle Festigkeit in kritischen Bereichen des Fahrzeugs erheblich verbessern, was zu einer robusteren und widerstandsfähigeren Karosserie führt.

Bei einer weiteren bevorzugten Ausgestaltung des Blechformteils bzw. des Stahlflachproduktes gilt für die erste Überzugsdicke k1 und die zweite Überzugsdicke k2: ${k}_{1} > 3 , 5 ⋅ {k}_{2}$

Es hat sich gezeigt, dass sichergestellt ist, dass beim üblichen Warmumformprozess sowohl im ersten wie auch im zweiten Bereich ausreichend Eisen in den Überzug eindiffundiert ist, wenn dieses Verhältnis eingehalten wird.

An dieser Stelle ist zu bemerken, dass die Dicke des metallischen Überzugs während des Warmumformprozess ansteigt, da ein signifikanter Anteil von Eisen in den Schutzüberzug eindiffundiert. Gemäß der Erfindung ist die Dicke des Überzugs im ersten und im zweiten Bereich so ausgewählt, dass nach dem üblichen Warmumformprozess in beiden Bereichen ein vergleichbarer Überzug vorliegt (d.h. mit ähnlichen prozentualen Gehalten von Eisen). Aus diesem Grund steigt die Schichtdicke im ersten und im zweiten Bereich auch beim Umformprozess um den gleichen Faktor. Dies führt dazu, dass die Relation ${k}_{1} > 3 , 5 ⋅ {k}_{2}$ sowohl für das Stahlflachprodukt (d.h. vor der Umformung) als auch für das Blechformteil (d.h. nach der Umformung) Gültigkeit hat, auch wenn die Zahlenwerte für *k*₁ und *k*₂ jeweils unterschiedlich sind.

Die Erfindung betrifft weiterhin ein Verfahren zur Herstellung eines vorgenannten Stahlflachproduktes, umfassend die folgenden Schritte:
- Bereitstellen einer ersten Blechlage mit einer ersten Dicke d1, aufweisend einen metallischen Überzug mit einer ersten Überzugsdicke k1, wobei die erste Blechlage einen ersten Flächeninhalt aufweist;
- Bereitstellen einer zweiten Blechlage mit einer dritten Dicke d3, aufweisend einen metallischen Überzug mit einer zweiten Überzugsdicke k2, wobei die zweite Blechlage einen zweiten Flächeninhalt aufweist und wobei der zweite Flächeninhalt kleiner ist als der erste Flächeninhalt;
- Übereinander Anordnen und Verbinden der ersten Blechlage mit der zweiten Blechlage, so dass sich eine erste Zone und eine zweite Zone ergeben,
   i. wobei das Stahlflachprodukt in der zweiten Zone aus mindestens der ersten Blechlage und der zweiten Blechlage gebildet wird,
   ii. wobei zweite Blechlage vollflächig mit der ersten Blechlage überlappt,
   iii. und wobei das Stahlflachprodukt in der ersten Zone aus der ersten Blechlage gebildet wird.

Die vorstehend erwähnten metallischen Überzüge des Stahlflachproduktes bzw. der ersten und zweiten Blechlage des Stahlflachprodukts sind insbesondere wie folgt hergestellt und beschaffen:
Ein solcher metallischer Überzug wird bevorzugt durch Schmelztauchbeschichten des Stahlflachproduktes erzeugt. Dabei wird das Stahlflachprodukt durch eine flüssige Schmelze geführt, die aus 0,1-15 Gew.-% Si bevorzugt mehr als 1,0 Gew-% Si, optional 2-4 Gew.-% Fe, optional bis zu 5 Gew.-% Alkali- oder Erdalkalimetalle, bevorzugt bis zu 1,0 Gew.-% Alkali- oder Erdalkalimetalle, und optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht. Bevorzugt beträgt der optionale Gehalt an Alkali- oder Erdalkalimetallen mindestens 0,1 Gew.-%.

Bei einer bevorzugten Variante beträgt der Si-Gehalt der Schmelze 0,5-3,5 Gew.-% oder 7-12 Gew.-%, insbesondere 8-10 Gew.-%.

Bei einer bevorzugten Variante umfasst der optionale Gehalt an Alkali- oder Erdalkalimetallen in der Schmelze 0,1-1,0 Gew.-% Mg, insbesondere 0,1-0,7 Gew.-% Mg, bevorzugt 0,1-0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen. Weiterhin bevorzugt besteht der optionale Gehalt an Alkali- oder Erdalkalimetallen in der Schmelze aus 0,1-1,0 Gew.-% Mg, insbesondere 0,1-0,7 Gew.-% Mg, bevorzugt 0,1-0,5 Gew.-% Mg und optional mindestens 0,0015 Gew.-% Ca, insbesondere mindestens 0,01 Gew.-% Ca.

Weiterhin bevorzugt ist der Gehalt an optionalen weiteren Bestandteilen auf 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt. Insbesondere entsprechen die optionalen weiteren Bestandteile unvermeidbaren Verunreinigungen und sind lediglich in technisch nicht vermeidbaren Gehalten vorhanden. Dies gilt für alle zuvor alle zuvor erläuterten Schmelzenzusammensetzungen.

Der so aufgebrachte Überzug weist nach dem Schmelztauchbeschichten insbesondere eine Legierungsschicht und eine Al-Basisschicht auf. Die Legierungsschicht entsteht dadurch, dass beim Schmelztauchbeschichten Eisen aus dem Stahlsubstrat in den flüssigen Überzug diffundiert, so dass der metallische Überzug des Stahlflachproduktes beim Erstarren insbesondere eine Legierungsschicht und eine Al-Basisschicht aufweist.

Die Legierungsschicht liegt auf dem Stahlsubstrat auf und grenzt unmittelbar an dieses an. Die Legierungsschicht wird im Wesentlichen aus Aluminium und Eisen gebildet. Die übrigen Elemente aus dem Stahlsubstrat oder der Schmelzenzusammensetzung reichern sich nicht signifikant in der Legierungsschicht an. Bevorzugt besteht die Legierungsschicht aus 25-60 Gew.-% Fe, bevorzugt α-Eisen, optionalen weiteren Bestandteilen, deren Gehalte in Summe auf höchstens 5,0 Gew.-%, bevorzugt 2,0% beschränkt sind, und als Rest Aluminium, wobei der Al-Gehalt bevorzugt in Richtung Oberfläche ansteigt. Bei den optionalen weiteren Bestandteilen handelt es sich bevorzugt um die neben Eisen vorhandenen Elemente im Stahl des Stahlsubstrates und die übrigen Elemente aus der Schmelze wie Zn und Alkali- oder Erdalkalimetalle (insb. Kalizium und Magnesium). Die Legierungsschicht ist bevorzugt ferritisch.

Die Al-Basisschicht liegt auf der Legierungsschicht und grenzt unmittelbar an diese an. Bevorzugt entspricht die Zusammensetzung der Al-Basisschicht der Zusammensetzung der Schmelze des Schmelzbades. Das heißt, sie besteht aus 1,0-15 Gew.-% Si, optional 2-4 Gew.-% Fe, optional bis zu 5,0 Gew.-% Alkali- oder Erdalkalimetalle, bevorzugt bis zu 1,0% Gew.-% Alkali- oder Erdalkalimetalle, optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium. Bevorzugte Zusammensetzungen der Al-Basisschicht entsprechen den bevorzugten Schmelzenzusammensetzungen. Entsprechend gilt auch für die Al-Basisschicht, dass der Gehalt an optionalen weiteren Bestandteilen bevorzugt auf 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt ist. Insbesondere entsprechen die optionalen weiteren Bestandteile unvermeidbaren Verunreinigungen und sind lediglich in technisch nicht vermeidbaren Gehalten vorhanden.

Bei einer bevorzugten Variante der Al-Basisschicht umfasst der optionale Gehalt an Alkali- oder Erdalkalimetallen 0,1-1,0 Gew.-% Mg, insbesondere 0,1-0,7 Gew.-% Mg, bevorzugt 0,1-0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen. Weiterhin bevorzugt besteht der optionale Gehalt an Alkali- oder Erdalkalimetallen aus 0,1-1,0 Gew.-% Mg, insbesondere 0,1-0,7 Gew.-% Mg, bevorzugt 0,1-0,5 Gew.-% Mg und optional mindestens 0,0015 Gew.-% Ca, insbesondere mindestens 0,1 Gew.-% Ca.

Bei einer weiter bevorzugten Variante des metallischen Überzuges ist der Si-Gehalt in der Legierungsschicht geringer als der Si-Gehalt in der Al-Basisschicht.

Der metallische Überzug hat bevorzugt eine Dicke von 5-60 µm, insbesondere von 10 bis 40 µm. Das Auflagengewicht des metallischen Überzuges beträgt insbesondere $30 - 360 \frac{g}{{m}^{2}}$ bei beidseitigen metallischen Überzügen bzw. $15 - 180 \frac{g}{{m}^{2}}$ bei der einseitigen Variante. Bevorzugt beträgt das Auflagengewicht des metallischen Überzuges $100 - 200 \frac{g}{{m}^{2}}$ bei beidseitigen Überzügen bzw. $50 - 100 \frac{g}{{m}^{2}}$ für einseitige Überzüge. Besonders bevorzugt beträgt das Auflagengewicht des metallischen Überzuges $120 - 180 \frac{g}{{m}^{2}}$ bei beidseitigen Überzügen bzw. $60 - 90 \frac{g}{{m}^{2}}$ für einseitige Überzüge.

Die Dicke der Legierungsschicht ist bevorzugt kleiner als 20 µm, besonders bevorzugt kleiner 16 µm, besonders bevorzugt kleiner 12 µm, insbesondere kleiner 10 µm. Die Dicke der Al-Basisschicht ergibt sich aus der Differenz der Dicken von metallischem Überzug und Legierungsschicht. Bevorzugt beträgt die Dicke der Al-Basisschicht auch bei dünnen metallischen Überzügen mindestens 1 µm.

Bei einer bevorzugten Variante umfasst das Stahlflachprodukt eine auf dem metallischen Überzug angeordnete Oxidschicht. Die Oxidschicht liegt dabei insbesondere auf der Al-Basisschicht und bildet bevorzugt den äußeren Abschluss des metallischen Überzuges.

Die Oxidschicht besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und / oder Magnesiumoxid alleine oder als Mischung vorhanden. Bevorzugt besteht der nicht von den Oxiden und optional vorhandenen Hydroxiden eingenommene Rest der Oxidschicht aus Silizium, Aluminium, Eisen und/oder Magnesium in metallischer Form. Für die optionale Ausführungsform mit Zink als Bestandteil der Al-Basisschicht sind auch Zinkoxidbestanddteile in der Oxidschicht vorhanden.

Bevorzugt hat die Oxidschicht des Stahlflachproduktes eine Dicke, die größer ist als 50 nm. Insbesondere beträgt die Dicke der Oxidschicht maximal 500 nm.

Bei einer alternativen Ausgestaltung umfasst das Stahlflachprodukt einen metallischen Überzug auf Zink-Basis. Dabei kann der metallische Überzug einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher metallischer Überzug auf Zink-Basis umfasst bevorzugt bis zu 6,0 Gew.-% Al, 0,1-10,0 Gew.-% Mg, optional 0,1-40 Gew.-% Mangan oder Kupfer, optional 0,1-10,0 Gew.-% Cer, optional höchstens 0,2 Gew.-% weitere Elemente, unvermeidbare Verunreinigung und als Rest Zink. Insbesondere beträgt der Al-Gehalt maximal 2,0 Gew.-%, bevorzugt maximal 1,5 Gew.-%. Bevorzugt beträgt der Al-Gehalt mindestens 0,2 Gew.-%, insbesondere mindestens 0,5 Gew.-%. Der Mg-Gehalt beträgt insbesondere maximal 3,0 Gew.-%, bevorzugt maximal 1,0 Gew.-%. Der metallische Überzug kann durch Schmelztauchbeschichten oder durch physikalische Gasphasenabscheidung oder durch elektrolytische Verfahren aufgebracht werden. Beim Schmelztauchbeschichten ist dies auch die Zusammensetzung der verwendeten Schmelze. Optional, insbesondere im Fall einer Aufbringung mittels Schmelztauchbeschichten, weist der metallische Überzug auf Zink-Basis eine Legierungsschicht und eine Zn-Basisschicht auf. Die Legierungsschicht entsteht dadurch, dass beim Schmelztauchbeschichten Eisen aus dem Stahlsubstrat in den flüssigen Überzug diffundiert, so dass der metallische Überzug des Stahlflachproduktes beim Erstarren insbesondere eine Legierungsschicht und eine Zn-Basisschicht aufweist.

Wie zuvor erläutert diffundiert beim Warmumformen Eisen in den metallischen Überzug, daher unterscheidet sich der Aufbau und die Zusammensetzung des metallischen Überzuges nach der Warmumformung von der Zusammensetzung vor der Warmumformung.

Für die vorstehend erwähnten metallischen Überzüge des Blechformteils bzw. der ersten und zweiten Blechlage des Blechformteils gilt insbesondere das nachstehende:
Bevorzugt umfasst der metallische Überzug des Blechformteils eine Legierungsschicht und eine Al-Basisschicht. Beim Blechformteil wird die Legierungsschicht auch häufig als Interdiffusionsschicht bezeichnet.

Beim Warmumformprozess vom Stahlflachprodukt zum Blechformteil kommt es zum Eindiffundieren von Eisen aus dem Stahlsubstrat in den metallischen Überzug. Dies führt dazu, dass der Eisengehalt des metallischen Überzuges beim Blechformteil deutlich höher ist als beim Stahlflachprodukt. Entsprechend erhöht sich die Dicke des metallischen Überzuges durch das Warmumformen. Typischerweise beträgt die Erhöhung der Dicke des metallischen Überzuges 20-50 %, bevorzugt 20-35 %, wobei der genaue Wert von den Prozessbedingungen abhängig ist.

Die Dicke des metallischen Überzuges des Blechformteils beträgt bevorzugt mindestens 10 µm, besonders bevorzugt mindestens 20 µm, insbesondere mindestens 30 µm.

Die Dicke des metallischen Überzuges des Blechformteils beträgt bevorzugt maximal 50µm, insbesondere maximal 40 µm, besonders bevorzugt maximal 35µm.

Die Dicke der Legierungsschicht des Blechformteils beträgt bevorzugt maximal 30 µm, besonders bevorzugt maximal 20 µm, insbesondere maximal 16 µm, besonders bevorzugt maximal 12 µm. Die Dicke der Legierungsschicht ist bevorzugt größer als 0 µm, besonders bevorzugt beträgt die Dicke mindestens 3 µm, insbesondere mindestens 5 µm.

Die Dicke der Al-Basisschicht ergibt sich aus der Differenz der Dicken von metallischem Überzug und Legierungsschicht. Bevorzugt beträgt die Dicke der Al-Basisschicht des Blechformteils mindestens 5 µm, insbesondere mindestens 10 µm, bevorzugt mindestens 15 µm, besonders bevorzugt mindestens 20 µm.

Die Legierungsschicht liegt dabei auf dem Stahlsubstrat auf und grenzt unmittelbar an dieses an. Bevorzugt besteht die Legierungsschicht des Blechformteils aus 35-90 Gew.-% Fe, 0,1-12 Gew.-% Si und optionalen weiteren Bestandteilen, deren Gehalte in Summe auf höchstens 3,5 Gew.-%, bevorzugt 2,0 Gew.-% beschränkt sind, und als Rest Aluminium. Insbesondere besteht die Legierungsschicht des Blechformteils aus 55-90 Gew.-% Fe, 0,1-12 Gew.-% Si und optionalen weiteren Bestandteilen, deren Gehalte in Summe auf höchstens 3,5 Gew.-%, bevorzugt 2,0 Gew.-% beschränkt sind, und als Rest Aluminium. Bei den optionalen weiteren Bestandteilen handelt es sich bevorzugt um die neben Eisen vorhandenen Elemente im Stahl des Stahlsubstrates und die übrigen Elemente aus der Schmelze wie Zn und Alkali- oder Erdalkalimetalle. Diese Elemente aus der Schmelze reichern sich nur zu einem sehr geringen Teil in der Legierungsschicht an.

Die Legierungsschicht hat bevorzugt im substratnahen Bereich ein ferritisches Gefüge.

Die einzelnen Schichten des metallischen Überzuges von Stahlflachprodukt und Blechformteil Legierungsschicht können beispielsweise anhand von Längsschliffen identifiziert werden, die einer Ätzung mit 3 % Nital (alkoholische Salpetersäure) unterzogen worden sind. An solchen Längsschliffen werden auch die genannten Dicken (z.B. der Legierungsschicht) bestimmt. Hierzu wird eine lichtmikroskopische Aufnahme auf mindestens 50 µm Breite angefertigt mit einer Auflösung von mindestens 500 Pixeln auf 50 µm. Mittels computergestützter Bildverarbeitung wird die Dicke der gewünschten Schicht als Mittelwert der Dicke auf dem 50 µm breitem Bildfeld bestimmt.

Die Al-Basisschicht des Blechformteils liegt auf der Legierungsschicht und grenzt unmittelbar an diese an. Bevorzugt besteht die Al-Basisschicht des Blechformteils aus 35-55 Gew.-% Fe, 0,4-10 Gew.-% Si, optional bis zu 3 Gew.-% Alkali- oder Erdalkalimetalle, bevorzugt bis zu 1,0 Gew.-% Alkali- oder Erdalkalimetalle, optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium. Bevorzugt beträgt der optionale Gehalt an Alkali- oder Erdalkalimetallen mindestens 0,1 Gew.-%. Auch für die Al-Basisschicht des Blechformteils gilt, dass der Gehalt an optionalen weiteren Bestandteilen auf bevorzugt 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt ist. Insbesondere entsprechen die optionalen weiteren Bestandteile unvermeidbaren Verunreinigungen und sind lediglich in technisch nicht vermeidbaren Gehalten vorhanden.

Bei einer bevorzugten Variante der Al-Basisschicht umfasst der optionale Gehalt an Alkali- oder Erdalkalimetallen 0,1-1,0 Gew.-% Mg, insbesondere 0,1-0,7 Gew.-% Mg, bevorzugt 0,1-0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen. Weiterhin bevorzugt besteht der optionale Gehalt an Alkali- oder Erdalkalimetallen aus 0,1-1,0 Gew.-% Mg, insbesondere 0,1-0,7 Gew.-% Mg, bevorzugt 0,1-0,5 Gew.-% Mg und optional mindestens 0,0015 Gew.-% Ca, insbesondere mindestens 0,1 Gew.-% Ca.

Die Al-Basisschicht kann eine homogene Elementverteilung aufweisen, bei der die lokalen Elementgehalte um nicht mehr als 10 % variieren. Bevorzugte Varianten der Al-Basisschicht weisen dagegen siliziumarme Phasen und siliziumreiche Phasen auf. Siliziumarme Phasen sind dabei Gebiete, deren mittlerer Si-Gehalt mindestens 20 % weniger beträgt als der mittlere Si-Gehalt der Al-Basisschicht. Siliziumreiche Phasen sind dabei Gebiete, deren mittlerer Si-Gehalt mindestens 20 % mehr beträgt als der mittlere Si-Gehalt der Al-Basisschicht.

Bei einer bevorzugten Variante sind die siliziumreichen Phasen innerhalb der siliziumarmen Phase angeordnet. Insbesondere bilden die siliziumreichen Phasen eine mindestens 40 % durchgehende Schicht, die von siliziumarmen Gebieten begrenzt ist. Unter einer durchgehenden Schicht siliziumreicher Phasen ist zu verstehen, dass im senkrechten Schliffbild eine Linie so parallel zur Oberfläche des Stahlsubstrates gelegt werden kann, dass sie vollständig durch die siliziumreichen Phasen verläuft. Dagegen ist unter einer mindestens X % durchgehenden Schicht zu verstehen, dass im senkrechten Schiffbild eine Linie so parallel zur Oberfläche des Stahlsubstrates gelegt werden kann, dass sie zu mindestens X % innerhalb der siliziumreichen Phasen verläuft. Im hier vorliegenden Fall liegen die siliziumreichen Phasen also derart zusammenhängend, dass im senkrechten Schliffbild eine Linie so parallel zur Oberfläche des Stahlsubstrates gelegt werden kann, dass sie zu mindestens 40 % innerhalb der siliziumreichen Phasen verläuft. Bei einer alternativen Ausführungsvariante sind die siliziumreichen Phasen inselförmig in der siliziumarmen Phase angeordnet.

Unter "inselförmig" wird im Sinne dieser Anmeldung eine Anordnung verstanden, bei der diskrete unzusammenhängende Bereiche von einem anderen Material umschlossen werden - es sich also "Inseln" eines bestimmten Materials in einem anderen Material befinden.

Bei einer bevorzugten Variante umfasst das Blechformteil eine auf dem metallischen Überzug angeordnete Oxidschicht. Die Oxidschicht liegt dabei insbesondere auf der Al-Basisschicht und bildet bevorzugt den äußeren Abschluss des metallischen Überzuges.

Die Oxidschicht des Blechformteils besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und / oder Magnesiumoxid alleine oder als Mischung vorhanden. Bevorzugt besteht der der nicht von den Oxiden und optional vorhandenen Hydroxiden eingenommene Rest der Oxidschicht aus Silizium, Aluminium, Eisen und/oder Magnesium in metallischer Form.

Die Oxidschicht hat bevorzugt eine Dicke von mindestens 50 nm, insbesondere von mindestens 100 nm. Weiterhin beträgt die Dicke bevorzugt maximal 4 µm, insbesondere maximal 2 µm.

Bei einer speziellen Ausgestaltung umfasst das Blechformteil einen metallischen Überzug auf Zink-Basis.

Ein solcher metallischer Überzug auf Zink-Basis umfasst bevorzugt bis zu 80 Gew.-% Fe, bis zu 6,0 Gew.-% Al, 0,1-10,0 Gew.-% Mg, optional 0,1-40 Gew.-% Mangan oder Kupfer, optional 0,1-10,0 Gew.-% Cer, optional höchstens 0,2 Gew.-% weitere Elemente, unvermeidbare Verunreinigung und als Rest Zink. Insbesondere beträgt der Al-Gehalt maximal 2,0 Gew.-%, bevorzugt maximal 1,5 Gew.-%. Bevorzugt beträgt der Al-Gehalt mindestens 0,2 Gew.-%, insbesondere mindestens 0,5 Gew.-%. Der Fe-Gehalt, der durch Eindiffundieren zustande kommt, beträgt bevorzugt mehr als 20 Gew.-%, insbesondere mehr als 30 Gew.-%. Zudem beträgt der Fe-Gehalt insbesondere maximal 70 Gew-%, insbesondere maximal 60 Gew.-%. Der Mg-Gehalt beträgt insbesondere maximal 3,0 Gew.-%, bevorzugt maximal 1,0 Gew.-%. Der metallische Überzug kann durch Schmelztauchbeschichten oder durch physikalische Gasphasenabscheidung oder durch elektrolytische Verfahren aufgebracht werden.

Die Erfindung betrifft weiterhin ein Verfahren zum Herstellen eines Blechformteils, umfassend folgende Arbeitsschritte:
a) Bereitstellen eines zuvor beschriebenen Stahlflachproduktes;
b) Erwärmen des Blechzuschnitts derart, dass zumindest teilweise die Ac3 Temperatur des Zuschnitts überschritten ist und die Temperatur TEinlg des Zuschnitts beim Einlegen in ein für ein Warmpressformen vorgesehenes Umformwerkzeug (Arbeitsschritt c)) zumindest teilweise eine Temperatur oberhalb von Ms+100°C aufweist, wobei Ms die Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer tTrans höchstens 20 s, bevorzugt höchstens 15 s, beträgt;
d) Warmpressformen des Blechzuschnitts zu dem Blechformteil, wobei der Zuschnitt im Zuge des Warmpressformens über eine Dauer tWZ von mehr als 1 s auf eine Zieltemperatur TZiel abgekühlt und optional dort gehalten wird, wobei die Abkühlung von der Temperatur TEinlg zumindest bis zur Martensitstarttemperatur mit einer zumindest teilweise mehr als 25 K/s betragenden Abkühlgeschwindigkeit rWZ erfolgt;
e) Entnehmen des auf die Zieltemperatur abgekühlten Blechformteils aus dem Umformwerkzeug.

Beim erfindungsgemäßen Verfahren wird somit ein Zuschnitt, der aus einem entsprechend den voranstehenden Erläuterungen in geeigneter Weise zusammengesetzten Stahlflachprodukt besteht, bereitgestellt (Arbeitsschritt a)), der dann in an sich bekannter Weise so erwärmt wird, dass zumindest teilweise die Ac3 Temperatur des Zuschnitts überschritten ist und die Temperatur T_{Einlg} des Zuschnitts beim Einlegen in ein für ein Warmpressformen vorgesehenes Umformwerkzeug (Arbeitsschritt c)) zumindest teilweise eine Temperatur oberhalb von Ms+100°C beträgt. Unter teilweisem Überschreiten einer Temperatur (hier Ac3 bzw. Ms+100°C) wird im Sinne dieser Anmeldung verstanden, dass mindestens 30 %, insbesondere mindestens 60 %, des Volumens des Zuschnitts eine entsprechende Temperatur überschreiten. Beim Einlegen in das Umformwerkzeug weist also mindestens 30 % des Zuschnitts ein austenitisches Gefüge auf, d.h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. Alternativ können auch bestimmte Abschnitte des Zuschnitts nach einer Erwärmung und vor dem Einlegen in das Umformwerkzeug lokal wieder heruntergekühlt werden. In dem Teil des Zuschnitts, dessen Temperatur beim Einlegen in das Umformwerkzeug niedriger ist, ist der Austenitanteil beim Einlegen in das Umformwerkzeug deutlich geringer. Daher entsteht in diesem Teil des Zuschnitts im Zuge der Umformung im Umformwerkzeug kein oder nur deutlich weniger Martensit, so dass das Gefüge dort deutlich weicher ist als in den jeweils anderen Teilen, in denen ein martensitisches Gefüge vorliegt. Auf diese Weise kann im jeweils geformten Blechformteil gezielt ein weicherer Bereich eingestellt werden, indem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen Ac3 und 1000 °C, insbesondere oberhalb von Ac3+20 K liegt, bevorzugt zwischen 850 °C und 950 °C liegt.

Bevorzugt wird die Temperatur des Blechzuschnitts derart gesteuert, dass die zumindest teilweise im Blechzuschnitt erreichte Temperatur für mindestens 10 Sekunden, bevorzugt für mindestens 30 Sekunden, oberhalb von Ac3, bevorzugt oberhalb von Ac3+20 K liegt. Weiterhin bevorzugt wird die Temperatur des Blechzuschnitts derart gesteuert, dass die zumindest teilweise im Blechzuschnitt erreichte Temperatur für maximal 300 Sekunden, bevorzugt maximal 250 Sekunden, oberhalb von Ac3, bevorzugt oberhalb von Ac3+20 K liegt. Längere Zeiten oberhalb von Ac3 haben den Vorteil, dass eine gleichmäßige Austenitisierung sichergestellt ist. Zudem ist sichergestellt, dass sich kohlenstoffreiche Phasen (z.B. Karbide) ausreichend auflösen. Andererseits führt ein zu langes Halten oberhalb von Ac3 zu einer Kornvergröberung, die sich negativ auf die mechanischen Eigenschaften auswirkt.

Dabei ist die zu überschreitende Mindesttemperatur Ac3 gemäß der von HOUGARDY, HP. in Werkstoffkunde Stahl Band 1: Grundlagen, Verlag Stahleisen GmbH, Düsseldorf, 1984, p. 229., angegebenen Formel $Ac 3 \left[°C\right] = 902 ° C + \left(-255*%C+19*%Si-11*%Mn-5*%Cr+13*%Mo-20*%Ni+55*%V\right) \left[°C/Gew.-%\right]$ mit %C = jeweiliger C-Gehalt, %Si = jeweiliger Si-Gehalt, %Mn = jeweiliger Mn-Gehalt, %Cr = jeweiliger Cr-Gehalt, %Mo = jeweiliger Mo-Gehalt, %Ni =jeweiliger Ni-Gehalt und %V = jeweiliger V-Gehalt des Stahls, aus dem der Zuschnitt besteht, bestimmt.

Eine optimal gleichmäßige Eigenschaftsverteilung lässt sich dadurch erreichen, dass der Zuschnitt im Arbeitsschritt b) vollständig durcherwärmt wird und dabei bevorzugt 100 %, des Volumens über den genannten Temperaturen (Ac3 bzw. Ms+100°C) bzw. in den genannten Temperaturintervallen liegt.

Bei einer bevorzugten Ausführungsvariante beträgt die mittlere Aufheizgeschwindigkeit r_{Ofen} des Blechzuschnittes beim Erwärmen in Schritt b) mindestens 3 K/s, bevorzugt mindestens 5 K/s, insbesondere mindestens 10 K/s, bevorzugt mindestens 15 K/s. Die mittlere Aufheizgeschwindigkeit r_{Ofen} ist dabei als mittlere Aufheizgeschwindigkeit von 30 °C auf 700 °C zu verstehen.

Bei einer bevorzugten Ausführungsvariante erfolgt die Erwärmung in einem Ofen mit einer Ofentemperatur T_{Ofen} von mindestens 850 °C, bevorzugt mindestens 880 °C, besonders bevorzugt mindestens 900 °C, insbesondere mindestens 920 °C, und maximal 1000 °C, bevorzugt maximal 950 °C, besonders bevorzugt maximal 930 °C.

Bevorzugt beträgt der Taupunkt im Ofen beträgt hierbei mindestens -20 °C, bevorzugt mindestens -15 °C, insbesondere mindestens -5 °C, besonders bevorzugt mindestens 0 °C, insbesondere mindestens 5 °C und maximal +25 °C, bevorzugt maximal + 20 °C insbesondere maximal +15 °C.

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850 °C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C. Ein typischer Anwendungsfall weist aufeinanderfolgende Heizzonen vor, wobei die Folge der Temperaturen der Heizzonen sukzessive ansteigt, beispielsweise bei einem Ofen mit acht aufeinanderfolgenden Heizzonen mit den Temperaturen (800 °C; 830 °C; 860 °C; 890 °C; 910 °C; 930 °C; 930 °C; 930 °C). Bei einem alternativen typischen Anwendungsfall liegen aufeinanderfolgende Heizzonen vor, wobei die Folge der Temperaturen der Heizzonen ein lokales Minimum bei einer inneren Heizzone aufweist. Innere Heizzonen sind alle Heizzonen außer der ersten und der letzten Heizzone. Ein Beispiel für einen solchen Verlauf ist ein Ofen mit acht Heizzonen mit den Temperaturen (880 °C; 830 °C; 780 °C; 800 °C; 800 °C; 880 °C; 930 °C; 930 °C).

Die Gesamtzeit im Ofen t_{Ofen}, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von Ac3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen, eine ebenso an sich bekannte Induktionserwärmungseinrichtung oder konduktive Erwärmungseinrichtung oder Kontakterwärmungseinrichtung oder eine konventionelle Einrichtung zum Warmhalten von Stahlbauteilen handeln kann, entnommen und so schnell in das Umformwerkzeug transportiert, dass seine Temperatur beim Eintreffen in dem Umformwerkzeug zumindest teilweise oberhalb von Ms+100°C liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der Ac1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb einer Transferdauer t_{Trans} von vorzugsweise höchstens 20 s, insbesondere von maximal 15 s absolviert. Die Transferdauer t_{Trans} ist definiert als der Zeitraum zwischen Zeitpunkt, an dem 50 % des Volumens des Zuschnitts die Erwärmungseinrichtung verlassen hat, und dem Zeitpunkt, an dem der Zuschnitt mit dem Umformwerkzeug in Kontakt kommt. Ein derart schneller Transport ist erforderlich, um eine zu starke Abkühlung vor der Verformung zu vermeiden.

Das Umformwerkzeug besitzt beim Einlegen des Zuschnitts typischerweise eine Temperatur unterhalb von 200 °C, insbesondere liegt die Temperatur zwischen der Raumtemperatur (RT) und 200 °C oder zwischen der Temperatur des Kühlmediums, mit dem das Umformwerkzeug temperiert wird, und 200 °C, bevorzugt liegt die Temperatur zwischen 20 °C und 180 °C, insbesondere zwischen 50 °C und 150 °C. Bei besonderen Ausgestaltungen beträgt die Temperatur des Umformwerkzeugs maximal 100 °C, bevorzugt maximal 80 °C. Optional kann das Umformwerkzeug in einer besonderen Ausführungsform zumindest bereichsweise auf eine Temperatur T_{WZ} von mindestens 200 °C, insbesondere mindestens 300 °C temperiert sein, um das Bauteil nur partiell zu härten. Weiterhin beträgt die Umformwerkzeugtemperatur T_{WZ} bevorzugt maximal 600 °C, insbesondere maximal 550 °C. Es ist lediglich sicherzustellen, dass die Umformwerkzeugtemperatur T_{WZ} unterhalb der gewünschten Zieltemperatur T_{Ziel} liegt.

Die Temperatur des Umformwerkzeuges T_{WZ} ist als die Oberflächentemperatur des Umformwerkzeuges zu verstehen. Diese kann beispielsweise mit einem Quotientenpyrometer oder einem anderen Pyrometer gemessen werden.

Die Verweilzeit im Umformwerkzeug t_{WZ} beträgt bevorzugt mindestens 2 s, insbesondere mindestens 3 s, besonders bevorzugt mindestens 5 s. Maximal beträgt die Verweilzeit im Umformwerkzeug bevorzugt 25 s, insbesondere maximal 20 s.

Die Zieltemperatur T_{Ziel} des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150 °C. Alternativ liegt die Zieltemperatur T_{Ziel} des Blechformteils besonders bevorzugt unter Ms-50°C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die Martensitstarttemperatur eines im Rahmen der erfindungsgemäßen Vorgaben liegenden Stahls ist gemäß der Formel: $Ms \left[°C\right] = 541 ° C + \left(-401*C-36*Mn-10,5*Si-14*Cr-18*Ni-17*Mo\right) \left[°C/Gew.-%\right]$ zu berechnen, wobei hier mit C der C-Gehalt, mit Mn der Mn-Gehalt, mit Mo der Mo-Gehalt, mit Cr der Cr-Gehalt, mit Ni der Ni-Gehalt und mit Si der Si-Gehalt des jeweiligen Stahls in Gew.-% bezeichnet sind (Trzaska, Jacek. (2016). Calculation of Critical Temperatures by Empirical Formulae. Archives of Metallurgy and Materials. 61. 10.1515/amm-2016-0167.)

Die Ac1-Temperatur und die Ac3-Temperatur eines im Rahmen der erfindungsgemäßen Vorgaben liegenden Stahls ist gemäß den Formeln: $Ac 1 \left[°C\right] = 739 ° C + \left(-22*C-7*Mn+2*Si+14*Cr+13*Mo-13*Ni+20*V\right) \left[°C/Gew.-%\right]$ und $Ac 3 \left[°C\right] = 902 ° C + \left(-255*C+19*Si-11*Mn-5*Cr+13*Mo-20*Ni+55*V\right) \left[°C/Gew.-%\right]$ zu berechnen, wobei auch hier mit C der C-Gehalt, mit Si der Si-Gehalt mit Mn der Mn-Gehalt mit Cr der Cr-Gehalt, mit Mo der Mo-Gehalt, mit Ni der Ni-Gehalt und mit V der Vanadium-Gehalt des jeweiligen Stahls bezeichnet sind (HOUGARDY, HP. in Werkstoffkunde Stahl Band 1: Grundlagen, Verlag Stahleisen GmbH, Düsseldorf, 1984, p. 229.)

Alternativ können die oben genannten Umwandlungstemperaturen Ms, Ac1 und Ac3 auch mittels Dilatometermessungen bestimmt werden.

Im Umformwerkzeug wird der Zuschnitt somit nicht nur zu dem Blechformteil geformt, sondern gleichzeitig auch die Zieltemperatur abgeschreckt. Konkret bedeutet dies, dass der Zuschnitt im Umformwerkzeug zunächst umgeformt wird und anschließend im geschlossenen Umformwerkzeug gehalten wird. Die Abkühlung beginnt bereits beim Schließen des Umformwerkzeuges, da der Zuschnitt mit der kälteren Umformwerkzeug in Kontakt kommt. Zum Ende des Umformvorgangs und über den Haltevorgang im Umformwerkzeug steigt der Kontaktdruck der Umformwerkzeugflächen auf den Zuschnitt (bzw. auf das aus dem Zuschnitt geformte Blechformteil). Dieser höhere Kontaktdruck führt zu einer Steigerung der Abkühlrate.

Die Abkühlrate im Umformwerkzeug r_{WZ} beträgt insbesondere mindestens 25 K/s, bevorzugt mindestens 30 K/s, insbesondere mindestens 50 K/s, in besonderer Ausführung mindestens 100 K/s. Die Abkühlrate r_{WZ} ist dabei definiert als die gemittelte Abkühlrate zwischen der Temperatur T_{Einlg} beim Einlegen in das Umformwerkzeug und der Martensitstarttemperatur.

Bei einer bevorzugten Ausführungsform beträgt auch die Abkühlrate r_{WZ}' von der Einlegetemperatur T_{Einlg} zur Martensitfinishtemperatur mindestens 25 K/s, bevorzugt mindestens 30 K/s, insbesondere mindestens 50 K/s, in besonderer Ausführung mindestens 100 K/s. Die Martensitfinishtemperatur wird dabei mittels Dilatometermessungen bestimmt.

Die weitere Abkühlung von der Martensitstarttemperatur bzw. der Martensitfinishtemperatur auf die Zieltemperatur T_{Ziel} kann auch mit geringeren Abkühlraten erfolgen, da sich diese Abkühlung nicht mehr signifikant auf die Gefügeausbildung auswirkt.

Nach dem Entnehmen des Blechformteils in Schritt e) erfolgt ein Abkühlen des Blechformteils auf eine Abkühltemperatur T_{AB} von weniger als 100 °C innerhalb einer Abkühldauer t_{AB} von 0,5 bis 600 s. Dies geschieht im Regelfall durch eine Luftabkühlung.

Bei dem erfindungsgemäßen Blechformteil handelt es sich bevorzugt um ein Bauteil für ein Landfahrzeug, Seefahrzeug oder Luftfahrzeug. Besonders bevorzugt handelt es sich um ein Automobilteil, insbesondere um ein Karosserieteil. Bevorzugt ist das Bauteil eine B-Säule, Längsträger, A-Säule, Schweller oder Querträger.

Im Folgenden wird die Erfindung anhand von Ausführungsbeispielen näher erläutert.

Die Figuren zeigen:

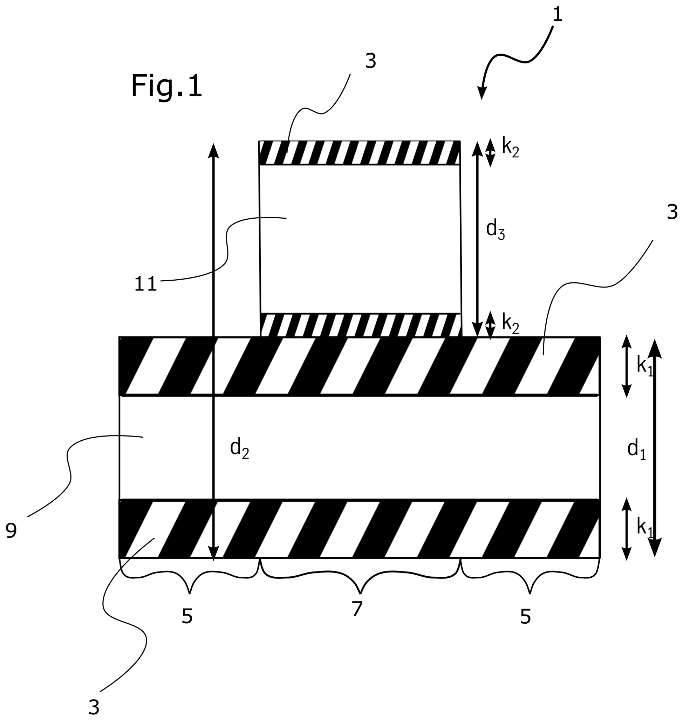

- **Figur 1**: eine schematische Darstellung des Stahlflachproduktes bzw. Blechformteils.

Zum Nachweis der Wirkung der Erfindung wurden mehrere Versuche durchgeführt. Dafür wurden Brammen mit den in Tabelle 1 angegebenen Zusammensetzungen mit einer Dicke von 240 mm und Breite von 1200 mm erzeugt, in einem Stoßofen auf eine Temperatur T1 von 1200 °C aufgeheizt. Anschließend wurden die Brammen zwischen 30 und 450 min auf T1 gehalten, bis die Temperatur T1 im Kern der Brammen erreicht war und die Brammen somit durcherwärmt waren. Die Brammen wurden mit ihrer jeweiligen Durcherwärmungstemperatur T1 aus dem Stoßofen ausgetragen und einem Warmwalzen unterzogen. Die Versuche wurden als kontinuierliche Warmbandwalzung ausgeführt. Dazu wurden die Brammen zunächst zu einem Zwischenprodukt der Dicke 40 mm vorgewalzt, wobei die Zwischenprodukte, welche bei der Warmbandwalzung auch als Vorbänder bezeichnet werden können, am Ende der Vorwalzphase jeweils eine Zwischenprodukttemperatur T2 von 1100 °C aufwiesen. Die Vorbänder wurden unmittelbar nach der Vorwalzung dem Fertigwalzen zugeführt, sodass die Zwischenprodukttemperatur T2 der Walzanfangstemperatur für die Fertigwalzphase entspricht. Die Vorbänder wurden zu Warmbänder mit einer Enddicke von 4 mm und einer Endwalztemperatur T3 von 890 °C ausgewalzt, auf die jeweilige Haspeltemperatur abgekühlt und bei einer Haspeltemperaturen T4 von 580 °C zu Coils aufgewickelt und dann in ruhender Luft abgekühlt. Die Warmbänder wurden in konventioneller Weise mittels Beizen entzundert, bevor sie einem Kaltwalzen unterzogen wurden, bis sich die in Tabelle 4 angegebene Dicke ergab. Die kaltgewalzten Stahlflachprodukte wurden in einem Durchlaufglühofen auf eine Glühtemperatur T5 von 870 °C erwärmt und für jeweils 100 s auf Glühtemperatur gehalten, bevor sie mit einer Abkühlrate von 1 K/s auf die Eintauchtemperatur T6 von 690 °C abgekühlt wurden. Die Kaltbänder wurden mit ihrer jeweiligen Eintauchtemperatur T6 durch ein schmelzflüssiges Beschichtungsbad der Temperatur T7 von 676 °C geführt. Die Bandgeschwindigkeit betrug dabei in allen Fällen 76 m/min. Die Zusammensetzung des Beschichtungsbads sind in Tabelle 2 angegeben. Nach dem Beschichten wurden die beschichteten Bänder abgeblasen, um die Auflagengewichte einzustellen. Hierfür wurde der Fließdruck geeignet reguliert, um das Auflagengewicht bzw. die Schichtdicke einzustellen, die jeweils in Tabelle 4 angegeben ist. Die Temperatur des Luftstroms betrug in allen Fällen 70 °C. Bei dem Prozess wurden die Bänder alle beidseitig beschichtet. Die Bänder wurden zunächst mit einer mittleren Abkühlrate von 10-15 K/s auf 600 °C abgekühlt. Im weiteren Abkühlverlauf zwischen 600 °C und 450 °C und zwischen 400 °C und 300 °C wurden die Bänder über die Abkühldauern T_{mT} von 18 s und T_{nT} von 15 s abgekühlt. Zwischen 450 °C und 400 °C und unterhalb von 220 °C wurden die Bänder mit einer Abkühlrate von jeweils 5-15 K/s abgekühlt.

Die in Tabelle 1 aufgeführten Stahlsubstrate lassen sich in eine erste Stahlklasse, eine zweite Stahlklasse und eine dritte Stahlklasse einteilen, wie in Tabelle 1 angegeben. Dabei führen Stähle der ersten Stahlklasse zu einer Zugfestigkeit nach der Umformung von 1200 MPa oder weniger, Stähle der zweiten Stahlklasse zu einer Zugfestigkeit nach der Umformung von 1300-1600 MPa und Stähle der dritten Stahlklasse zu einer Zugfestigkeit nach der Umformung von 1700 MPa und mehr.

Von den so erzeugten Stahlbändern sind jeweils Zuschnitte abgeteilt worden, die für die weiteren Versuche verwendet worden sind. Bei diesen Versuchen sind aus den jeweiligen Zuschnitten Blechformteil-Proben 1-16 in Form von 200 x 300 mm² großen Platten warmpressgeformt worden. Dazu sind die Zuschnitte in einer Erwärmungseinrichtung, beispielsweise in einem konventionellen Erwärmungsofen, von Raumtemperatur mit einer mittleren Aufheizgeschwindigkeit r_{Ofen} von 5 K/s (im Temperaturbereich zwischen 30 °C und 700 °C) in einem Ofen mit einer Ofentemperatur T_{Ofen} (siehe Tabelle 3) erwärmt worden. Die Gesamtzeit im Ofen, die ein Erwärmen und ein Halten umfasst, ist mit t_{Ofen} bezeichnet und in Tabelle 3 angegeben. Der Taupunkt im Ofen ist ebenfalls in Tabelle 3 angegeben. Anschließend sind die Zuschnitte aus der Erwärmungseinrichtung entnommen und in ein auf Raumtemperatur RT erwärmtes Umformwerkzeug eingelegt worden. Beim Entnehmen aus dem Ofen hatten die Zuschnitte die Ofentemperatur angenommen. Die sich aus der für das Entnehmen aus der Erwärmungseinrichtung, den Transport zum Werkzeug und das Einlegen ins Werkzeug zusammensetzende Transferzeit lag bei etwa 8 s. Die Temperatur der Zuschnitte beim Einlegen in das Umformwerkzeug T_{Einlg} lag in allen Fällen oberhalb der jeweiligen AC1-Temperatur. Das Umformwerkzeug hatte eine Temperatur T_{WZ} die der Raumtemperatur RT entsprach. Im Umformwerkzeug sind die Zuschnitte in einer Zeitdauer t_{WZ} zum jeweiligen Blechformteil umgeformt worden, wobei die Blechformteile im Werkzeug mit einer Abkühlgeschwindigkeit r_{WZ} von 50 K/s abgekühlt wurden. Abschließend sind die Proben auf Raumtemperatur abgekühlt worden. Die Abkühlung erfolgte dabei an ruhender Luft mit einer Abkühlrate von 7 K/s.

In der Tabelle 3 sind zwei Varianten für diesen Umformprozess angegeben. Mit der Variante "Standard" ist ein üblicher Prozess beschrieben, der für ein 1,5 mm dickes Stahlflachprodukt bei der Umformung zu einem Bauteil verwendet wird. Wird nun die Platine lokal aufgedickt um eine Verstärkung in einem Bereich zu erreichen, beispielsweise indem eine zweite Blechlage (ein sogenannter "Patch") auf einer ersten Blechlage angeordnet und mit dieser verbunden wird, so kommt es zwangsläufig dazu, dass dieser Bereich sich langsamer erwärmt und im Ergebnis eine niedrigere Endtemperatur erreicht.

In der DE 10 2017 216 177 A1 wurde versucht, dies durch eine Vorkonditionierung des Patches zu kompensieren.

Die vorliegende Erfindung zeigt jedoch, dass diese unterschiedliche Erwärmung zu vorteilhaften Eigenschaften führen kann.

Versuche haben ergeben, dass die Eigenschaften der zweiten Blechlage im Verbund mit der ersten Blechlage simuliert werden kann, indem man das Material der zweiten Blechlage einem angepassten Umformprozess unterzieht. Dieser angepasste Umformprozess ist in Tabelle 3 mit "Kurz" bezeichnet. Indem man also ein Material dem Umformprozess "Kurz" unterzieht und analysiert, erhält man eine Prognose wie die Eigenschaften wie sich ein Patch aus diesem Material verhält, wenn er angebracht auf einer ersten Blechlage den Prozess in der Variante "Standard" durchläuft.

Tabelle 4 zeigt nun die Ergebnisse der Versuche, wobei für verschiedene Substratmaterialien die Beschichtung variiert wurde.

Die angegebenen Biegewinkel des Blechformteils werden ermittelt, indem das Blechformteil zunächst einer Wärmbehandlung unterzogen wird, die analog bei einer kathodischen Tauchlackbeschichtung Anwendung findet. Kathodische Tauchlackierungen werden im Regelfall für entsprechende Bauteile in der Automobilindustrie durchgeführt. Bei einer kathodischen Tauchlackierung werden die Bauteile zunächst in einer wässrigen Lösung beschichtet. Diese Beschichtung wird anschließend bei einer Wärmebehandlung eingebrannt. Dabei werden die Blechformteile auf 170°C erwärmt und bei dieser Temperatur für 20 Minuten gehalten. Anschließend werden die Bauteile an Umgebungsluft auf Raumtemperatur abgekühlt. Da diese Wärmebehandlung Einfluss auf die mechanischen Kenngrößen haben kann, wurde hier eine entsprechende Wärmebehandlung vorgenommen (d.h. 170 °C für 20 Minuten). Bestimmt wurde der Biegewinkel des Materials nach VDA238-100.

Vergleicht man die Ergebnisse der Versuche 1-5 miteinander, so stellt man fest, dass die Proben, die den Standard-Prozess durchlaufen haben, alle einen ähnlichen Biegewinkel aufweisen. Dagegen weisen die Proben, die den Umformprozess "Kurz" durchlaufen haben, einen erhöhten Biegewinkel auf. Dabei steigt der Biegewinkel mit abnehmendem Auflagengewicht der Beschichtung.

Die Versuche 6-9 bestätigen diese Erhöhung des Biegewinkels für das Substrat B aus der zweiten Stahlklasse.

Somit hat ein Patch im Verbund nach der Umformung einen höheren Biegewinkel je geringer das Auflagengewicht seiner Beschichtung ist.

Bei Automobilbauteilen, die ein Patch beinhalten, ist es vorteilhaft eine erste Blechlage aus einem Material mit einer geringen Festigkeit mit einem Patch zu verbinden, der aus einem Material mit einer höheren Festigkeit besteht. Dann kann es jedoch zu größeren Variationen des Biegewinkels über das Bauteil kommen, was nachteilig ist. In einem solchen Fall würde das Bauteil bei einem Crash an dem, mit dem Patch verstärkten Bereich als erstes brechen, weil dies der Bereich mit dem geringsten Biegewinkel ist. Verwendet man nun erfindungsgemäß beim Patch eine Beschichtung mit einem reduzierten Auflagengewicht, so hat der verstärkte Bereich einen erhöhten Biegewinkel, der besser an die übrigen Bereiche des Bauteils angeglichen ist. Damit reduziert sich das Risiko, dass das Bauteil bei einem Crash in diesem Bereich versagt.

Ein Vergleich der Ergebnisse 6, 11 und 12 zeigt, dass sich für die Stähle B, C und D, die alle der zweiten Stahlklasse angehören, vergleichbare Ergebnisse ergeben. Eine gewisse Variation verbleibt, da das Kohlenstoffäquivalent und damit die Festigkeit zwischen den Legierungen variiert.

Das gleiche Ergebnis zeigen die Versuche 1, 13 und 14 für die Stähle E, F und G, die alle der dritten Stahlklasse angehören.

Die Versuche 15 und 16 im Vergleich zu den Versuchen 1 und 6 zeigen, dass auch bei geringen Variationen der Beschichtung der gleiche Effekt vorliegt.

In Figur 1 ist schematisch ein Blechformteil 1 dargestellt. Das Blechformteil 1 umfasst eine erste Blechlage 9 und eine zweite Blechlage 11. Die erste Blechlage 9 hat eine erste Dicke d1 und weist einen metallischen Überzug 3 mit einer ersten Überzugsdicke k1 auf. Die zweite Blechlage 11 hat eine dritte Dicke d3 und weist einen metallischen Überzug 3 mit einer zweiten Überzugsdicke k2 auf. Die Dicken des metallischen Überzuges beziehen sich jeweils auf eine Seite. Die erste Blechlage 9 und die zweite Blechlage 11 sind dabei übereinander angeordnet. Dabei überlappt die zweite Blechlage 11 vollflächig mit der ersten Blechlage 9 und hat einen kleineren Flächeninhalt als die erste Blechlage 9. Dadurch kommt es zur Bildung einer ersten Zone 5 und einer zweite Zone 7. In der ersten Zone 5 wird das Blechformteil aus der ersten Blechlage 9 gebildet. In der zweiten Zone 7 wird das Blechformteil aus der ersten Blechlage 9 und der zweiten Blechlage 11 gebildet. Das Blechformteil 1 hat damit in der zweiten Zone eine Dicke d2, die der Summe der Dicken der ersten Blechlage d1 und der zweiten Blechlage d3 entspricht. Die Dicke d2 ist also größer als die Dicke d1. Die Dicke des Überzuges in der zweiten Zone 7 auf mindestens einer Seite entspricht der Dicke des Überzuges der zweiten Blechlage k2.

**Tabelle 1 (Stahlsorten)**

| Stahl | C | Mn | Si | Al | Mo | Ni | Cr | Ti | V | Nb | B | N | P | S | Ca | W | CEV | Stahlklasse |
|---|---|---|---|---|---|---|---|---|---|---|---|---|---|---|---|---|---|---|
| A | 0,12 | 1,14 | 0,23 | 0,076 | 0,01 | 0,03 | 0,21 | 0,012 | 0 | 0,024 | 0,0024 | 0,0034 | 0,012 | 0,001 | 0,001 | 0,01 | 0,356 | 1 |
| B | 0,22 | 1,3 | 0,25 | 0,03 | 0,01 | 0,02 | 0,21 | 0,025 | 0,004 | 0,001 | 0,0025 | 0,004 | 0,015 | 0,002 | 0,0024 | - | 0,483 | 2 |
| C | 0,25 | 1,25 | 0,31 | 0,04 | 0,02 | 0,03 | 0,18 | 0,03 | 0,005 | 0,0018 | 0,0024 | 0,005 | 0,012 | 0,002 | 0,0007 | - | 0,501 | 2 |
| D | 0,21 | 1,26 | 0,16 | 0,19 | 0,023 | 0,045 | 0,22 | 0,013 | 0,007 | 0,034 | 0,0031 | 0,006 | 0,012 | 0,001 | 0,0024 | - | 0,473 | 2 |
| E | 0,31 | 1,1 | 0,15 | 0,20 | 0,10 | 0,03 | 0,11 | 0,008 | 0,15 | 0,020 | 0,002 | 0,004 | 0,005 | 0,0005 | 0,0006 | - | 0,567 | 3 |
| F | 0,326 | 1,4 | 0,266 | 0,041 | 0,006 | 0,013 | 0,265 | 0,042 | 0,202 | 0,003 | 0,0019 | 0,0056 | 0,013 | 0,002 | 0,0005 | - | 0,655 | 3 |
| G | 0,34 | 0,62 | 0,62 | 0,033 | 0,15 | 0,42 | 0,52 | 0,025 | 0,04 | 0,035 | 0,0028 | 0,0045 | 0,011 | 0,0015 | 0,001 | - | 0,613 | 3 |

| | | | | | | | | | | | | | | | | | | |
|---|---|---|---|---|---|---|---|---|---|---|---|---|---|---|---|---|---|---|
| Rest Eisen und unvermeidbare Verunreinigungen. Angaben jeweils in Gew.-%; | | | | | | | | | | | | | | | | | | |

**Tabelle 2 (Beschichtungsvarianten)**

| Beschichtung -variante | Schmelzenanalyse | | | | |
|---|---|---|---|---|---|
| | Si | Fe | Mg | Sonstige | Al |
| α | 9,5 | 3 | 0,3 | <1% | Rest |
| β | 10 | 3 | <0,01 | <1% | Rest |

**Tabelle 3 (Parameter Warmumformung)**

| Warmumformvariante | Mittlere Aufheizgeschwindigkeit r_{Ofen} [30 - 700 °C] [K/s] | T_{Ofen} [°C] | t Ofen [s] | Transfer-zeit [s] | Taupunkt Ofen [°C] | T_{Einlg} [°C] | T_{WZ} [°C] | t_{WZ} [s] | Abkühlgeschwindigkeit r_{WZ} [K/s] | T_{Ziel} [°C] |
|---|---|---|---|---|---|---|---|---|---|---|
| S (Standard ) | 5 | 920 | 270 | 8 | -5 | 802 | RT | 15 | 50 | 50 |
| K (Kurz) | 5 | 900 | 180 | 8 | -5 | 770 | RT | 15 | 50 | 50 |

| | | | | | | | | | | |
|---|---|---|---|---|---|---|---|---|---|---|
| Angaben teilweise gerundet | | | | | | | | | | |

**Tabelle 4 (Biegewinkel)**

| Variante | Stahlsorte | Blechdicke [mm] | Beschichtung | Auflagengewicht (beidseitig) (g/m^2) | Schichtdicke (vor WU) [µm] | Umformvarianten | Dicke nach WU [µm] | Biegewinkel (längs) | Biegewinkel (quer) |
|---|---|---|---|---|---|---|---|---|---|
| 1 | E | 1,5 | β | 40 | 7 | K | 9 | 44,1 | 48,7 |
| 2 | E | 1,5 | β | 40 | 7 | S | 10 | 38,9 | 41,8 |
| 3 | E | 1,5 | β | 60 | 11 | K | 13 | 42,8 | 44,8 |
| 4 | E | 1,5 | β | 60 | 11 | S | 13 | 41,0 | 43,2 |
| 5 | E | 1,5 | β | 150 | 27 | S | 33 | 39,4 | 41,3 |
| 6 | B | 1,5 | β | 40 | 7 | K | 9 | 57,8 | 64,1 |
| 7 | B | 1,5 | β | 60 | 11 | K | 14 | 57,7 | 60,9 |
| 8 | B | 1,5 | β | 80 | 15 | K | 18 | 50,1 | 52,9 |
| 9 | B | 1,5 | β | 150 | 27 | S | 32 | 44,0 | 46,0 |
| 10 | A | 1,5 | β | 150 | 27 | S | 33 | 78,3 | 81,1 |
| 11 | C | 1,5 | β | 40 | 7 | K | 9 | 55,3 | 61,1 |
| 12 | D | 1,5 | β | 40 | 7 | K | 10 | 57,6 | 63,8 |
| 13 | F | 1,5 | β | 40 | 7 | K | 10 | 37,4 | 41,2 |
| 14 | G | 1,5 | β | 40 | 7 | K | 9 | 40,2 | 44,5 |
| 15 | E | 1,5 | α | 40 | 7 | K | 9 | 44,4 | 48,6 |
| 16 | B | 1,5 | α | 40 | 7 | K | 9 | 58,0 | 64,9 |

## Patentansprüche

1. Blechformteil (1) mit einem metallischen Überzug (3) auf Aluminium-Basis,
- wobei das Blechformteil (1) mindestens eine erste Zone (5) und eine zweite Zone (7) umfasst,
- wobei das Blechformteil in der ersten Zone (5) eine erste Blechdicke d1 aufweist und der metallische Überzug (3) in der ersten Zone eine erste Überzugsdicke k1 aufweist,
- wobei das Blechformteil (1) in der zweiten Zone (7) eine zweite Blechdicke d2 aufweist und der metallische Überzug (3) in der zweiten Zone auf mindestens einer Seite eine zweite Überzugsdicke k2 aufweist,
- und wobei die zweite Blechdicke d2 größer ist als die erste Blechdicke d1 und die zweite Überzugsdicke k2 kleiner ist als die erste Überzugsdicke k1.

2. Blechformteil nach Anspruch 1, **dadurch gekennzeichnet, dass**
- das Blechformteil in der zweiten Zone aus mindestens einer ersten Blechlage und einer zweiten Blechlage gebildet wird,
- wobei die erste und die zweite Blechlage übereinander angeordnet sind,
- und wobei das Blechformteil in der ersten Zone aus der ersten Blechlage gebildet wird.

3. Blechformteil nach Anspruch 2, **dadurch gekennzeichnet, dass**
- die erste Blechlage ein erstes Stahlsubstrat aus einem ersten Stahl mit einem ersten Kohlenstoffäquivalent CEV aufweist
- und die zweite Blechlage ein zweites Stahlsubstrat aus einem zweiten Stahl mit einem zweiten Kohlenstoffäquivalent aufweist,
- wobei die Differenz aus zweiten Kohlenstoffäquivalent und erstem Kohlenstoffäquivalent mindestens 0,05%, insbesondere mindestens 0,10% beträgt.

4. Blechformteil nach einem der Ansprüche 2 bis 3, **dadurch gekennzeichnet, dass**
- die erste Blechlage ein erstes Stahlsubstrat aus einem ersten Stahl mit einem ersten Kohlenstoffäquivalent CEV aufweist
- und die zweite Blechlage ein zweites Stahlsubstrat aus einem zweiten Stahl mit einem zweiten Kohlenstoffäquivalent aufweist,
- wobei das erste Kohlenstoffäquivalent mindestens 0,47 Gew.-% beträgt.
- und wobei das zweite Kohlenstoffäquivalent mindestens 0,50 Gew.-% beträgt.

5. Blechformteil nach einem der Ansprüche 2 bis 4, **dadurch gekennzeichnet, dass**
- die erste Blechlage ein erstes Stahlsubstrat aus einem ersten Stahl aufweist, der zu einer ersten Stahlklasse gehört, und die zweite Blechlage ein zweites Stahlsubstrat aus einem zweiten Stahl aufweist, der zu einer zweiten Stahlklasse gehört,
- oder dass die erste Blechlage ein erstes Stahlsubstrat aus einem ersten Stahl aufweist, der zu einer ersten Stahlklasse gehört, und die zweite Blechlage ein zweites Stahlsubstrat aus einem zweiten Stahl aufweist, der zu einer dritten Stahlklasse gehört,
- oder dass die erste Blechlage ein erstes Stahlsubstrat aus einem ersten Stahl aufweist, der zu einer zweiten Stahlklasse gehört, und die zweite Blechlage ein zweites Stahlsubstrat aus einem zweiten Stahl aufweist, der zu einer dritten Stahlklasse gehört,
wobei ein Stahl der ersten Stahlklasse neben Eisen und unvermeidbaren Verunreinigungen (in Gew.-%) aus
| | |
|---|---|
| C: | 0,05-0,20 %, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |
sowie optional einem oder mehreren der Elemente "Cr, B, Mo, Ni, Cu, Nb, Ti, V, W" in folgenden Gehalten
| | |
|---|---|
| Cr: | 0,08-1,0 Gew.-%, |
| B: | 0,001-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001-1,0 Gew.-%, |
besteht,
wobei ein Stahl der zweiten Stahlklasse neben Eisen und unvermeidbaren Verunreinigungen (in Gew.-%) aus:
| | |
|---|---|
| C: | 0,12-0,30 Gew.-%, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |
sowie optional einem oder mehreren der Elemente "Cr, B, Mo, Ni, Cu, Nb, Ti, V, W" in folgenden Gehalten
| | |
|---|---|
| Cr: | 0,08-1,0 Gew.-%, |
| B: | 0,001-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001 -1,0 Gew.-%, |
besteht,
und wobei ein Stahl der dritten Stahlklasse neben Eisen und unvermeidbaren Verunreinigungen (in Gew.-%) aus
| | |
|---|---|
| C: | 0,25-0,8 Gew.-%, |
| Si: | 0,02-2,0 Gew.-%, |
| Mn: | 0,5-2,6 Gew.-%, |
| Al: | 0,01-1,0 Gew.-%, |
| P: | ≤ 0,05 Gew.-%, |
| | |
|---|---|
| S: | ≤ 0,05 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |
sowie optional einem oder mehreren der Elemente "Cr, B, Mo, Ni, Cu, Nb, Ti, V, W" in folgenden Gehalten
| | |
|---|---|
| Cr: | 0,08-1,0 Gew.-%, |
| B: | 0,001-0,010 Gew.-%, |
| Mo: | ≤0,5 Gew.-%, |
| Ni: | ≤0,5 Gew.-%, |
| Cu: | ≤0,2 Gew.-%, |
| Nb: | 0,01-0,2 Gew.-%, |
| Ti: | 0,008-0,10 Gew.-%, |
| V: | ≤0,3 Gew.-%, |
| W: | 0,001 -1,0 Gew.-%, |
besteht.

6. Blechformteil nach einem der Ansprüche 1 bis 5, **dadurch gekennzeichnet, dass** für die erste Blechdicke d1 und die zweite Blechdicke d2 gilt: ${d}_{2} > 1 , 4 ⋅ {d}_{1}$ Insbesondere ${d}_{2} > 2 , 0 ⋅ {d}_{1}$

7. Blechformteil nach einem der Ansprüche 1 bis 6, **dadurch gekennzeichnet, dass** für die erste Überzugsdicke k1 und die zweite Überzugsdicke k2 gilt: ${k}_{1} > 3 , 5 ⋅ {k}_{2}$

8. Stahlflachprodukt mit einem metallischen Überzug auf Aluminium-Basis, insbesondere zur Herstellung eines Blechformteils nach einem der Ansprüche 1 bis 7,
- wobei das Stahlflachprodukt mindestens eine erste Zone und eine zweite Zone umfasst,
- wobei das Stahlflachprodukt in der ersten Zone eine erste Blechdicke d1 aufweist und der metallische Überzug in der ersten Zone eine erste Überzugsdicke k1 aufweist,
- wobei das Stahlflachprodukt in der zweiten Zone eine zweite Blechdicke d2 aufweist und der metallische Überzug in der zweiten Zone auf mindestens einer Seite eine zweite Überzugsdicke k2 aufweist,
- und wobei die zweite Blechdicke d2 größer ist als die erste Blechdicke d1 und die zweite Überzugsdicke kleiner ist als die erste Überzugsdicke.

9. Verfahren zur Herstellung eines Stahlflachproduktes nach Anspruch 8, umfassend die folgenden Schritte:
- Bereitstellen einer ersten Blechlage mit einer ersten Dicke d1 aufweisend einen metallischen Überzug mit einer ersten Überzugsdicke k1, wobei die erste Blechlage einen ersten Flächeninhalt aufweist;
- Bereitstellen einer zweiten Blechlage mit einer dritten Dicke d3 aufweisend einen metallischen Überzug mit einer zweiten Überzugsdicke k2, wobei die zweite Blechlage einen zweiten Flächeninhalt aufweist und wobei der zweite Flächeninhalt kleiner ist als der erste Flächeninhalt;
- Übereinander Anordnen und Verbinden der ersten Blechlage mit der zweiten Blechlage, so dass sich eine erste Zone und eine zweite Zone ergeben,
i. wobei das Stahlflachprodukt in der zweiten Zone aus mindestens der ersten Blechlage und der zweiten Blechlage gebildet wird,
ii. wobei zweite Blechlage vollflächig mit der ersten Blechlage überlappt,
iii. und wobei das Stahlflachprodukt in der ersten Zone aus der ersten Blechlage gebildet wird.

10. Verfahren zum Herstellen eines Blechformteils nach einem der Ansprüche 1 bis 7, umfassend folgende Arbeitsschritte:
a) Bereitstellen eines Stahlflachproduktes nach Anspruch 8;
b) Erwärmen des Blechzuschnitts derart, dass zumindest teilweise die Ac3 Temperatur des Zuschnitts überschritten ist und die Temperatur TEinlg des Zuschnitts beim Einlegen in ein für ein Warmpressformen vorgesehenes Umformwerkzeug (Arbeitsschritt c)) zumindest teilweise eine Temperatur oberhalb von Ms+100°C aufweist, wobei Ms die Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer tTrans höchstens 20 s, bevorzugt höchstens 15 s, beträgt;
d) Warmpressformen des Blechzuschnitts zu dem Blechformteil, wobei der Zuschnitt im Zuge des Warmpressformens über eine Dauer tWZ von mehr als 1 s auf eine Zieltemperatur TZiel abgekühlt und optional dort gehalten wird, wobei die Abkühlung von der Temperatur TEinlg zumindest bis zur Martensitstarttemperatur mit einer zumindest teilweise mehr als 25 K/s betragenden Abkühlgeschwindigkeit rWZ erfolgt;
e) Entnehmen des auf die Zieltemperatur abgekühlten Blechformteils aus dem Umformwerkzeug.
